# EUROPEAN PATENT APPLICATION

(11) **EP 4 371 828 A1**
(43) Date of publication of application: **22.05.2024**
(21) Application number: 22901439.4
(22) Date of filing: 02.12.2022
(51) Int. Cl.: B60R 19/34, F16F 7/00, F16F 7/12, F16F 15/02

(54) **CRASH BOX**

(30) Priority: 03.12.2021 JP 2021197059
(71) Applicant: Toyoda Iron Works Co., Ltd., Toyota-shi, Aichi 471-8507 (JP)
(72) Inventor: YAMAMOTO Akiyoshi, Toyota-shi, Aichi 471-8507 (JP); RYUTAKI Kozo, Toyota-shi, Aichi 471-8507 (JP)
(74) Representative: Zimmermann, Tankred Klaus
(86) International application number: PCT/JP2022/044552
(87) International publication number: WO 2023/101009

(57) **Abstract**

A hollow tubular body is included which is placed along a vehicle front-and-rear direction, the tubular body includes a pair of half bodies of approximately hat shape in cross section, a pair of front mounting plates to be mounted in such a manner as to cover front end portions of the pair of half bodies, and a pair of rear mounting plates to be mounted in such a manner as to cover rear end portions of the pair of half bodies, the pair of front mounting plates and the pair of rear mounting plates are mounted on the pair of half bodies in a first direction by spot welding or riveting, pairs of flange portions formed by bending the pair of half bodies outward from both side edges on the opening sides of the pair of half bodies are superposed on each other, and mounted on each other in a second direction by spot welding, or riveting or bolting, and the first direction and the second direction are the same direction.

## Description

### TECHNICAL FIELD

The present invention relates to a crash box.

### BACKGROUND ART

A bumper reinforcement of a vehicle is mounted on a side member extending in a front-and-rear direction in the lower part of the vehicle body. The portion where the bumper reinforcement is mounted is often provided with a crash box designed to absorb impact energy at the time of a collision. For example, a crash box described in JP-A-2014-238103 includes a hollow tubular body placed along the vehicle front-and-rear direction, and a mounting plate fixed by, for example, arc welding to both axial end portions of the tubular body. The tubular body includes a pair of half bodies, and the half bodies are fixed by, for example, spot welding or arc welding with flange portions thereof superposed.

### SUMMARY OF INVENTION

When the tubular body and the mounting plates of the crash box described in the above publication are formed of alloyed hot-dip galvanized steel sheets, zinc fumes are generated from the surfaces when the tubular body and the mounting plates are fixed to each other by arc welding. Moreover, in butt arc welding for the tubular body and the mounting plates, a blowhole may be generated in a weld bead portion. As a result, a zinc fume removal process and a reworking of the bead portion are required, and the manufacturing cost increases. Moreover, when the tubular body is mounted by butt arc welding on the mounting plates, burn-through easily occurs in a thin portion, and it is difficult to achieve thinning.

One aspect of the disclosed technology is a crash box provided between a bumper reinforcement extending in a vehicle width direction and a side member extending in a vehicle front-and-rear direction to absorb impact energy at the time of a collision, the crash box including: a hollow tubular body placed along the vehicle front-and-rear direction, the tubular body including a pair of half bodies of approximately hat shape in cross section, the pair of half bodies each having a bottom surface portion, vertical wall portions extending from the bottom surface portion, and flange portions extending from the vertical wall portions; a pair of front mounting plates placed respectively at front end portions of the pair of half bodies and mounted on one of the bumper reinforcement and the side member; and a pair of rear mounting plates placed respectively at rear end portions of the pair of half bodies and mounted on the other of the bumper reinforcement and the side member, in which the pair of front mounting plates and the pair of rear mounting plates are mounted on the pair of half bodies in a first direction by spot welding or riveting, the flange portions are superposed on each other and mounted in a second direction by spot welding or riveting, or bolting, and the first direction and the second direction are the same direction.

In some embodiments, each of the front mounting plates of the pair and the rear mounting plates of the pair includes a plurality of bent pieces formed by bending parts thereof inward, the pair of front mounting plates and the pair of rear mounting plates are joined by spot welding the pluralities of bent pieces to outer surfaces of the bottom surface portions of the corresponding half bodies, and are mounted in such a manner as to cover the front and rear end portions of the pair of half bodies, and the pair of half bodies is joined together by spot welding with pairs of the flange portions superposed on each other.

Another aspect of the disclosed technology is a method for manufacturing the crash box, including the steps of: joining the pluralities of bent pieces of one of the front mounting plates and one of the rear mounting plates by spot welding to the outer surface of the bottom surface portion at both side edge portions of the corresponding one of the half bodies; joining the pluralities of bent pieces of the other front mounting plate and the other rear mounting plate by spot welding to the outer surface of the bottom surface portion at both side edge portions of the corresponding other half body; superposing the pairs of the flange portions on each other in such a manner that an inner surface of the bottom surface portion of the one of the half bodies faces an inner surface of the bottom surface portion of the other half body; and joining the pairs of the superposed flange portions by spot welding.

### BRIEF DESCRIPTION OF DRAWINGS

Fig. 1 is a plan view illustrating a crash box disposed between a side member and a bumper reinforcement according to one embodiment.
Fig. 2 is a perspective view of the crash box illustrated in Fig. 1.
Fig. 3 is an exploded perspective view of the crash box illustrated in Fig. 1.
Fig. 4 is a cross-sectional view of the crash box illustrated in Fig. 1, taken along line IV-IV
Fig. 5 is a cross-sectional view of the crash box illustrated in Fig. 1, taken along line V-V.
Fig. 6 is a cross-sectional view of the crash box illustrated in Fig. 1, taken along line VI-VI.
Fig. 7 is a perspective view illustrating a crash box according to another embodiment.
Fig. 8 is an exploded perspective view of the crash box illustrated in Fig. 7.
Fig. 9 is a cross-sectional view of the crash box illustrated in Fig. 7, taken along line IX-IX.
Fig. 10 is a plan view illustrating a crash box according to still another embodiment.
Fig. 11 is a perspective view of the crash box illustrated in Fig. 10.
Fig. 12 is an exploded perspective view of the crash box illustrated in Fig. 10.
Fig. 13 is a cross-sectional view of the crash box illustrated in Fig. 10, taken along line XIII-XIII.
Fig. 14 is a cross-sectional view of the crash box illustrated in Fig. 10, taken along line XIV-XIV.
Fig. 15 is a cross-sectional view of the crash box illustrated in Fig. 10, taken along line XV-XV
Fig. 16 is a cross-sectional view of a crash box according to yet another embodiment.
Fig. 17 is a plan view illustrating a crash box according to still yet another embodiment.
Fig. 18 is a perspective view of the crash box illustrated in Fig. 17 as viewed from the front side.
Fig. 19 is a perspective view of the crash box illustrated in Fig. 17 as viewed from the rear side.
Fig. 20 is an exploded perspective view of the crash box illustrated in Fig. 17.
Fig. 21 is a cross-sectional view of the crash box illustrated in Fig. 17, taken along line XXI-XXI.
Fig. 22 is a cross-sectional view of the crash box illustrated in Fig. 17, taken along line XXII-XXII.
Fig. 23 is a cross-sectional view of the crash box illustrated in Fig. 17, taken along line XXIII-XXIII.
Fig. 24 is a perspective view of a crash box according to still another embodiment as viewed from the front side.
Fig. 25 is an exploded perspective view of the crash box illustrated in Fig. 24.
Fig. 26 is a cross-sectional view of a crash box according to yet another embodiment.

### DESCRIPTION OF EMBODIMENTS

### [Crash Box]

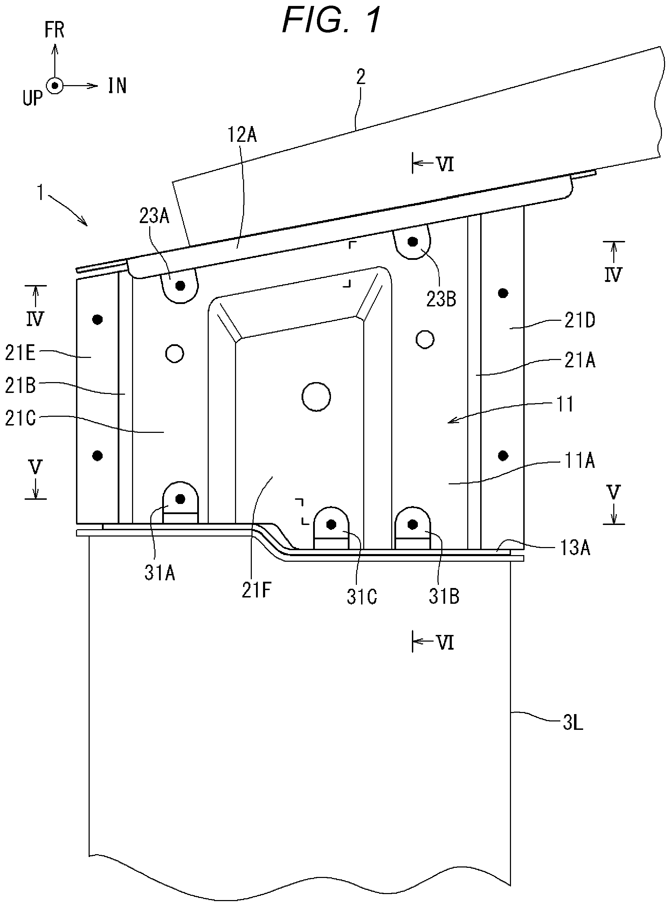

Various embodiments of the present invention are described in detail hereinafter with reference to the drawings. Figs. 1 to 6 illustrate a crash box 1 according to one embodiment. Note that an arrow FR provided as appropriate in each drawing indicates forward relative to a vehicle, and an arrow UP indicates upward. Furthermore, an arrow IN indicates inward in a vehicle width direction. In the following description, descriptions regarding the directions may be based on these directions.

As illustrated in Fig. 1, the crash box 1 is provided between an end portion of a bumper reinforcement 2 extending in the vehicle width direction and a side member 3L extending in a vehicle front-and-rear direction. The bumper reinforcement 2 is mounted on the side member 3L and, at the time of a collision, the crash box 1 is compressed and deformed in the vehicle front-and-rear direction to absorb the impact energy. Although Fig. 1 illustrates the left end portion of the bumper reinforcement 2 and the left crash box 1, the right end portion can also be configured symmetrically with respect to the left end portion. Note that although the bumper reinforcement 2 and the crash box 1 are described as members provided at the front end of the vehicle, various features described below are also applicable to a case in which these members are provided at the rear end of the vehicle as another embodiment.

### [Main Body Portion of Crash Box]

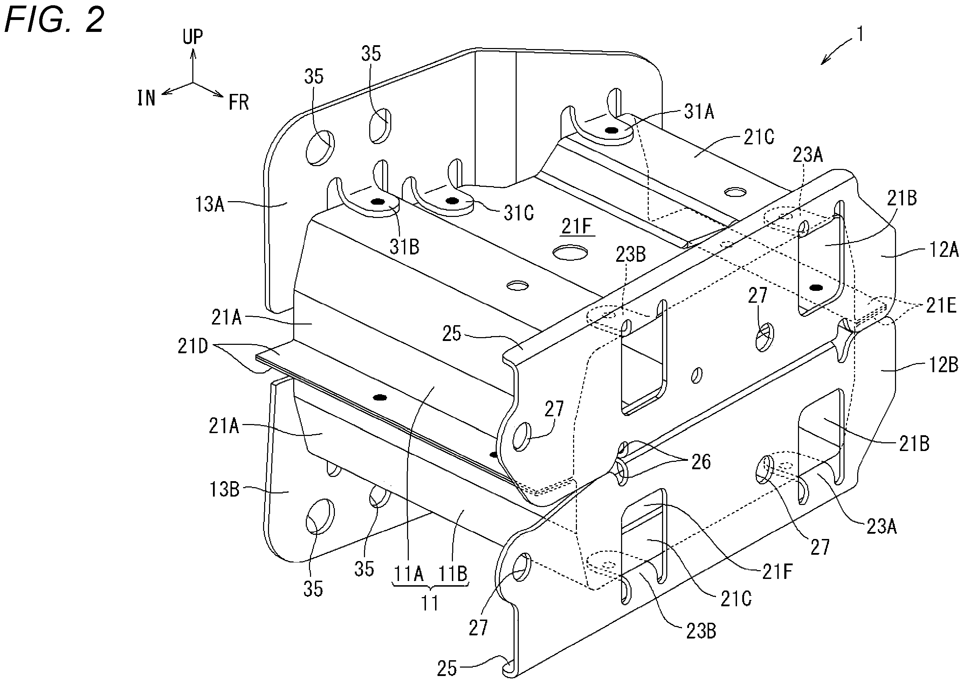

As illustrated in Figs. 1 and 2, the crash box 1 has a main body portion 11 formed as a hollow tubular body with its axis oriented in the vehicle front-and-rear direction. The main body portion 11 can be formed by, for example, combining upper and lower half bodies 11A and 11B having an approximately hat shape in cross section. Moreover, the crash box 1 includes a pair of front mounting plates 12A and 12B that are joined by spot welding, while in contact with the front (bumper-side) end portions of the half bodies 11A and 11B, in such a manner as to cover the front end portions. Moreover, the crash box 1 includes a pair of rear mounting plates 13A and 13B that are joined by spot welding, while in contact with the rear (vehicle body-side) end portions of the half bodies 11A and 11B, in such a manner as to cover the rear end portions.

The crash box 1 is disposed between the bumper reinforcement 2 and the side member 3L in a position in which the axis of the main body portion 11 forming the tubular body is substantially parallel to the vehicle front-and-rear direction, and is fixed integrally with the bumper reinforcement 2 and the side member 3L by unillustrated joining means such as bolts via the pair of front mounting plates 12A and 12B and the pair of rear mounting plates 13A and 13B. Here, in Figs. 1 and 2, black dots indicate joint locations by spot welding. Note that joining may be performed by not limited to spot welding but also another welding method such as laser welding.

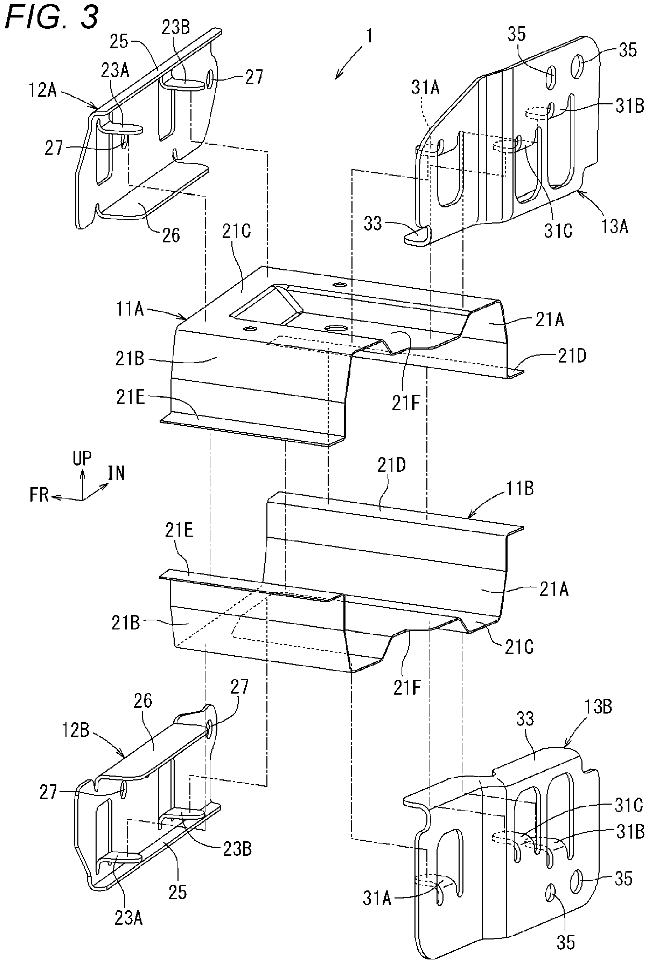

The half bodies 11A and 11B can be formed into approximately hat shapes in cross section that are generally symmetric with respect to each other in an up-and-down direction, by press forming of steel sheets. For example, alloyed hot-dip galvanized steel sheets or hot-dip galvanized steel sheets can be used. The thickness can be approximately 1.0 mm to 1.6 mm, and the tensile strength can be approximately 590 MPa. As illustrated in Fig. 3, the half bodies 11A and 11B each have a bottom surface portion 21C, a pair of opposing vertical wall portions 21A and 21B extending from the edges of the bottom surface portion 21C, and a pair of flange portions 21D and 21E extending outward, substantially parallel to the bottom surface portion 21C, from the edges of the pair of vertical wall portions 21A and 21B, that is, the edges on the opening side of the hat shape.

Moreover, as illustrated in Figs. 1 to 3, the rear edge portions of the half bodies 11A and 11B are recessed forward on the outer side in the vehicle width direction. Moreover, the width in the front-and-rear direction is narrower on the outer side in the vehicle width direction than on the inner side in the vehicle width direction, and the half bodies 11A and 11B each have a trapezoidal shape in plan view. Each of the half bodies 11A and 11B is formed, at the central portion in the vehicle width direction of the bottom surface portion 21C, with a recessed portion 21F that has a width of approximately half the total width in the vehicle width direction and is recessed into the opening of the hat shape (with a depth of, for example, approximately 10 mm to 20 mm) from a position slightly rearward of the front end portion relative to the vehicle to the rear end.

### [Front Mounting Plates]

The front mounting plates 12A and 12B are formed in approximately horizontal rectangular flat sheets in front view that are symmetric with respect to each other in the up-and-down direction, by press forming of the steel sheets. For example, alloyed hot-dip galvanized steel sheets or hot-dip galvanized steel sheets can be used. The thickness can be approximately 2.0 mm to 2.6 mm, and the tensile strength can be approximately 440 MPa. As illustrated in Figs. 2 to 4 and 6, the side edges on the outer side in the vehicle width direction of the front mounting plates 12A and 12B extend to the vicinities of the distal ends of the flange portions 21E on the outer side in the vehicle width direction of the half bodies 11A and 11B. The side edges on the inner side in the vehicle width direction of the front mounting plates 12A and 12B extend (for example, approximately 30 mm to 40 mm) beyond the distal ends of the flange portions 21D on the inner side in the vehicle width direction of the half bodies 11A and 11B.

The front mounting plates 12A and 12B extend (for example, approximately 10 mm to 20 mm) beyond the bottom surface portions 21C of their corresponding half bodies 11A and 11B in the up-and-down direction. Each of the front mounting plates 12A and 12B is provided with bent pieces 23A and 23B having an approximately L shape in side view at positions of the bottom surface portion 21C of its corresponding half body 11A or 11B, and the bent pieces 23A and 23B are spot-welded to the outer surface of the bottom surface portion 21C. The heights of protrusion of the bent pieces 23A and 23B from the front mounting plates 12A and 12B can be set to be substantially the same.

The bent pieces 23A and 23B of the each of the front mounting plates 12A and 12B are formed in an approximately L shape in side view by punching U-shaped grooves in the each of the front mounting plates 12A and 12B and bending portions surrounded by the grooves inward (toward the rear of the vehicle) at an approximately right angle at the positions of the bottom surface portion 21C of its corresponding half body 11A or 11B.

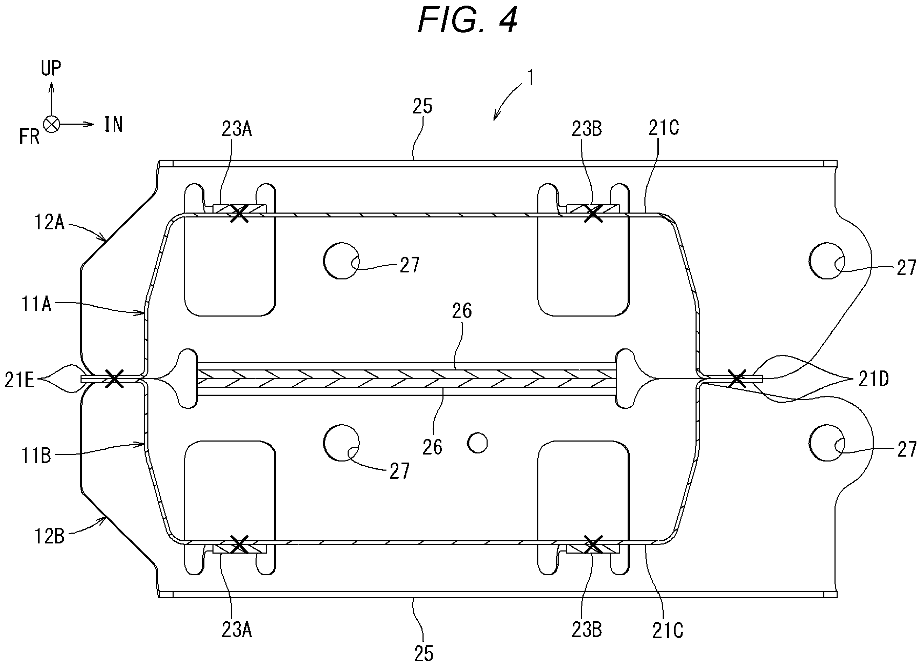

The front mounting plates 12A and 12B are provided, at their side edge portions on opposite sides, each with a narrow reinforcement rib 25 bent inward (toward the rear of the vehicle) at an approximately right angle. The front mounting plates 12A and 12B are each provided, at their adjacent side edge portions, with a wide reinforcement rib 26 bent inward (toward the rear of the vehicle) at an approximately right angle, all the way from the side edge on the outer side in the vehicle width direction (the left side in Fig. 4) of the bent piece 23A to the side edge on the inner side in the vehicle width direction (the right side in Fig. 4) of the bent piece 23B. The width in the vehicle front-and-rear direction of the reinforcement ribs 26 can be set to a substantially constant width that is substantially the same dimension as the height of protrusion of the bent pieces 23A and 23B from the front mounting plates 12A and 12B.

As illustrated in Fig. 4, the height of the each of the front mounting plates 12A and 12B from the inner surfaces in the vehicle up-and-down direction of the bent pieces 23A and 23B to the outer surface in the vehicle up-and-down direction of the reinforcement rib 26 is formed to be substantially the same as, or slightly less than, the height of the each of the half bodies 11A and 11B from the outer surface in the vehicle up-and-down direction of the bottom surface portion 21C to the outer surfaces in the vehicle up-and-down direction of the flange portions 21D and 21E.

The each of the front mounting plates 12A and 12B is formed with through-holes 27 at a position outward in the vehicle width direction relative to the center in the vehicle width direction and at a position of an inner edge portion in the vehicle width direction. An unillustrated nut is mounted on the rear end portion of each of the through-holes 27 by joining such as arc welding, spot welding, or laser welding, and is integrally assembled by bolting to the bumper reinforcement 2.

### [Rear Mounting Plates]

As illustrated in Figs. 2, 3, and 5, the rear mounting plates 13A and 13B are formed in approximately horizontal rectangular shapes in front view that are symmetric with respect to each other in the up-and-down direction, by press forming of steel sheets. For example, alloyed hot-dip galvanized steel sheets or hot-dip galvanized steel sheets can be used. The thickness can be approximately 2.0 mm to 2.6 mm, and the tensile strength can be approximately 440 MPa. The rear mounting plates 13A and 13B can have substantially the same thickness as the front mounting plates 12A and 12B. Specifically, as illustrated in Figs. 1 to 3, the rear mounting plates 13A and 13B are bent along the rear ends of their corresponding half bodies 11A and 11B, and formed in a stepped shape.

The rear mounting plates 13A and 13B extend to substantially the central portions of the flange portions 21D and 21E of the half bodies 11A and 11B in the vehicle width direction. The rear mounting plates 13A and 13B extend beyond the main body portion 11 in the up-and-down direction. For example, the width in the up-and-down direction of the rear mounting plates 13A and 13B can be approximately twice the height from the flange portions 21D and 21E to the bottom surface portions 21C of the corresponding half bodies 11A and 11B. The upper edge on the outer side in the vehicle width direction of the upper rear mounting plate 13A is inclined outward and obliquely downward.

Each of the rear mounting plates 13A and 13B is provided with two approximately L-shaped bent pieces 31A and 31B at positions of the bottom surface portion 21C of its corresponding half body 11A or 11B, and the bent pieces 31A and 31B are spot-welded to the outer surface of the bottom surface portion 21C. The each of the rear mounting plates 13A and 13B is provided with an approximately L-shaped bent piece 31C at a position of the recessed portion 21F of its corresponding half body 11A or 11B, and the bent piece 31C is spot-welded to the outer surface of the recessed portion 21F. The heights of protrusion of the bent pieces 31A to 31C from the rear mounting plates 13A and 13B can be set to be substantially the same.

The two outer bent pieces 31A and 31B of the each of the rear mounting plates 13A and 13B are formed in an approximately L shape in side view by punching U-shaped grooves in the each of the rear mounting plates 13A and 13B and bending portions surrounded by the grooves inward (toward the front of the vehicle) at a substantially right angle at the positions of the bottom surface portion 21C of the each of the half bodies 11A and 11B.

The central bent piece 31C of the each of the rear mounting plates 13A and 13B is similarly formed in an approximately L shape in side view by punching a U-shaped groove in the each of the rear mounting plates 13A and 13B and bending portions surrounded by the grooves inward (toward the front of the vehicle) at an approximately right angle at the position of the recessed portion 21F of the corresponding half body 11A or 11B.

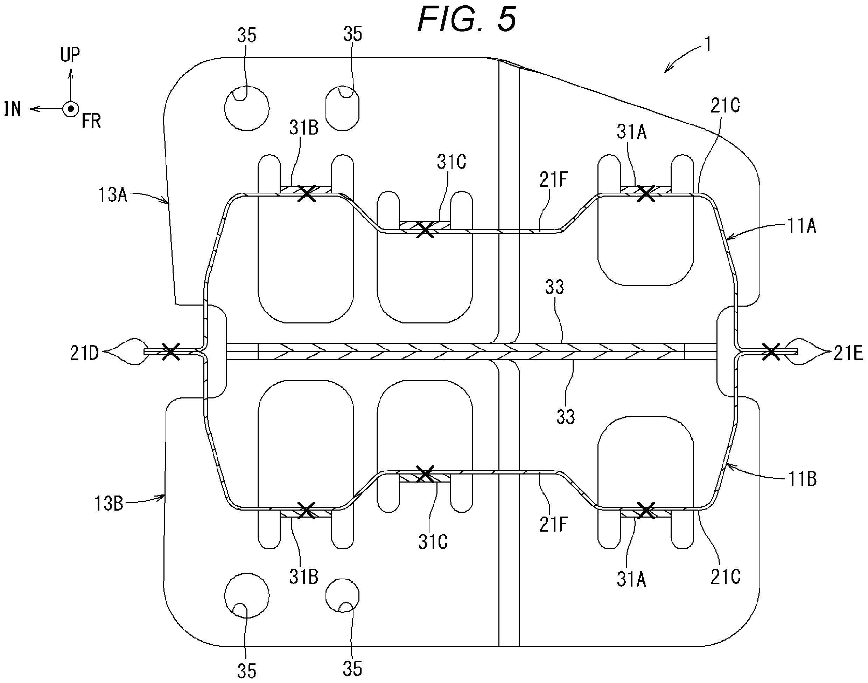

The rear mounting plates 13A and 13B are each provided, at their adjacent side edge portions, with a wide reinforcement rib 33 bent inward (toward the front of the vehicle) at an approximately right angle, all the way from the side edge on the outer side in the vehicle width direction (the right side in Fig. 5) of the bent piece 31A to the side edge on the inner side in the vehicle width direction (the left side in Fig. 5) of the bent piece 31B. The width in the vehicle front-and-rear direction of the reinforcement ribs 33 can be set to a substantially constant width that is substantially the same dimension as the height of protrusion of the bent pieces 31A to 31C from the rear mounting plates 13A and 13B.

As illustrated in Fig. 5, the height of the each of the rear mounting plates 13A and 13B from the bent pieces 31A and 31B to the reinforcement rib 33 is formed to be substantially the same as, or slightly less than, the height of the each of the half bodies 11A and 11B from the outer surface of the bottom surface portion 21C in the vehicle up-and-down direction to the outer surfaces of the flange portions 21D and 21E in the vehicle up-and-down direction.

The each of the rear mounting plates 13A and 13B is formed with two through-holes 35 aligned along the vehicle width direction between the bent piece 31B and a side edge portion outward of the bent piece 31B. An unillustrated bolt is inserted through each of the through-holes 35 from the front side of the vehicle, and is integrally assembled by bolting to the side member 3L.

### [Assembly of Crash Box]

An assembly procedure of the crash box 1 is described with reference to Figs. 3 to 6. Firstly, the front mounting plate 12A to be placed on the upper side is brought into contact with the front end portion of the corresponding half body 11A, and the bent pieces 23A and 23B are brought into contact with the outer surface of the bottom surface portion 21C of the half body 11A. Consequently, the side edge of the front mounting plate 12A is located at a position corresponding to the side edge on the outer side in the vehicle width direction of the flange portion 21E on the outer side in the vehicle width direction of the half body 11A.

Subsequently, the rear mounting plate 13A to be placed on the upper side is brought into contact with the rear end portion of the corresponding half body 11A, and the two outer bent pieces 31A and 31B are brought into contact with the outer surface of the bottom surface portion 21C of the half body 11A. The central bent piece 31C is brought into contact with the outer surface of the recessed portion 21F formed in the bottom surface portion 21C. Consequently, both side edges of the rear mounting plate 13A are located at positions corresponding to substantially the central portions in the vehicle width direction of the flange portions 21D and 21E of the half body 11A.

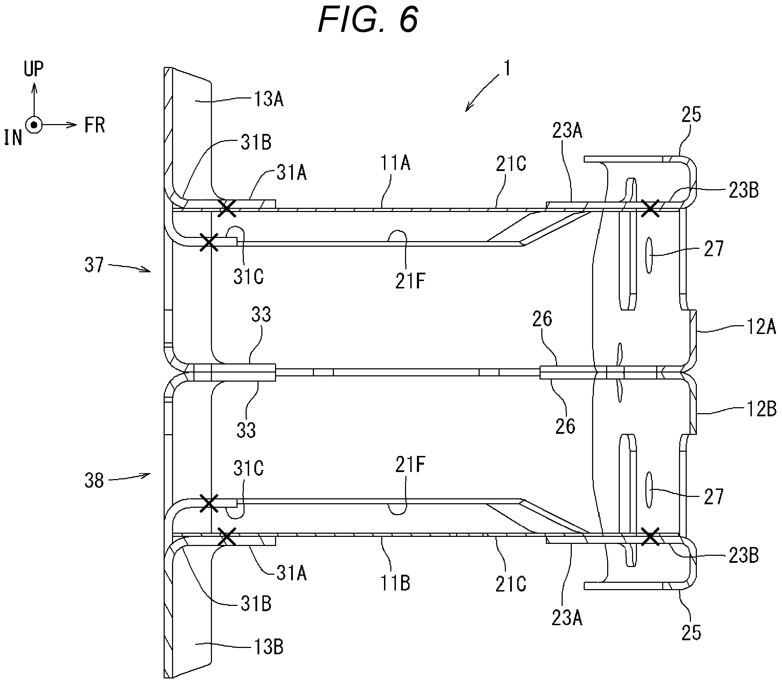

The bent pieces 23A and 23B of the front mounting plate 12A are then joined by spot welding to the outer surface of the bottom surface portion 21C of the corresponding half body 11A. The bent pieces 31A to 31C of the rear mounting plate 13A are joined by spot welding to the outer surfaces of the bottom surface portion 21C and the recessed portion 21F of the half body 11A. Consequently, an upper side semifinished product 37 (refer to Fig. 6) is assembled in which the front mounting plate 12A and the rear mounting plate 13A are welded in such a manner as to cover the front and rear end portions of the half body 11A. Here, in Figs. 4 to 6, x marks indicate joint locations by spot welding.

Next, the half body 11B to be placed on the lower side is placed in such a manner that the opening side of the hat shape faces downward. Then, the corresponding front mounting plate 12B is brought into contact with the front end portion of the half body 11B, and the bent pieces 23A and 23B are brought into contact with the outer surface of the bottom surface portion 21C of the half body 11B. Consequently, the side edge on the outer side in the vehicle width direction of the front mounting plate 12B is located at a position corresponding to the side edge on the outer side in the vehicle width direction of the flange portion 21E on the outer side in the vehicle width direction of the half body 11B.

Subsequently, the rear mounting plate 13B to be placed on the lower side is brought into contact with the rear end portion of the half body 11B, and the bent pieces 31A and 31B are brought into contact with the outer surface of the bottom surface portion 21C of the half body 11B. The bent piece 31C of the rear mounting plate 13B is brought into contact with the outer surface of the recessed portion 21F formed in the bottom surface portion 21C. Consequently, both side edges in the vehicle width direction of the rear mounting plate 13B are located at positions corresponding to substantially the central portions in the vehicle width direction of the flange portions 21D and 21E of the half body 11B.

Next, the bent pieces 23A and 23B of the front mounting plate 12B are joined by spot welding to the outer surface of the bottom surface portion 21C of the half body 11B. The bent pieces 31A to 31C of the rear mounting plate 13B are joined by spot welding to the outer surfaces of the bottom surface portion 21C and the recessed portion 21F of the half body 11B. Consequently, a lower side semifinished product 38 (refer to Fig. 6) is assembled in which the front mounting plate 12B and the rear mounting plate 13B are welded in such a manner as to cover the front and rear end portions of the half body 11B. Here, in Figs. 4 to 6, x marks indicate joint locations by spot welding.

After that, as illustrated in Fig. 3, the flange portions 21D of the half bodies 11A and 11B are superposed on each other, and the flange portions 21E of the half bodies 11A and 11B are superposed on each other, in such a manner that the inner surface of the bottom surface portion 21C of the half body 11A forming the upper side semifinished product 37 faces the inner surface of the bottom surface portion 21C of the half body 11B forming the lower side semifinished product 38. As illustrated in Figs. 1 to 5, each of the pair of superposed flange portions 21D and the pair of superposed flange portions 21E is then joined together by spot welding, in a plurality of places, for example, two places, in the vehicle front-and-rear direction. Consequently, as illustrated in Fig. 2, the crash box 1 is assembled. Here, in Figs. 1 and 2, black dots indicate joint locations by spot welding. In Figs. 4 and 5, x marks indicate joint locations by spot welding.

In the crash box 1 described above, the mounting direction in which the front mounting plates 12A and 12B and the rear mounting plates 13A and 13B are mounted by spot welding on the half bodies 11A and 11B is the same direction as the mounting direction in which the flange portions 21D and 21E of the half bodies 11A and 11B are superposed on each other and mounted by spot welding. As a result, the assembly time of the crash box 1 can be reduced, and the manufacturing cost can be reduced.

Moreover, arc welding is not required for the manufacture of the crash box 1 described above, and it is possible to avoid burn-through caused by arc welding in a thin portion. As a result, the front mounting plates 12A and 12B, the rear mounting plates 13A and 13B, and the half bodies 11A and 11B, which form the crash box 1, can be thinned (to a plate thickness of, for example, approximately 0.8 mm to 1 mm). Moreover, also when the front mounting plates 12A and 12B, the rear mounting plates 13A and 13B, and the half bodies 11A and 11B are formed of hot-dip galvanized steel sheets or alloyed hot-dip galvanized steel sheets, it is possible to prevent zinc fumes from being generated from the surface of the crash box 1, eliminate the need for the zinc fume removal process, and reduce the manufacturing cost.

### [Joining of Flanges with Rivet Pins]

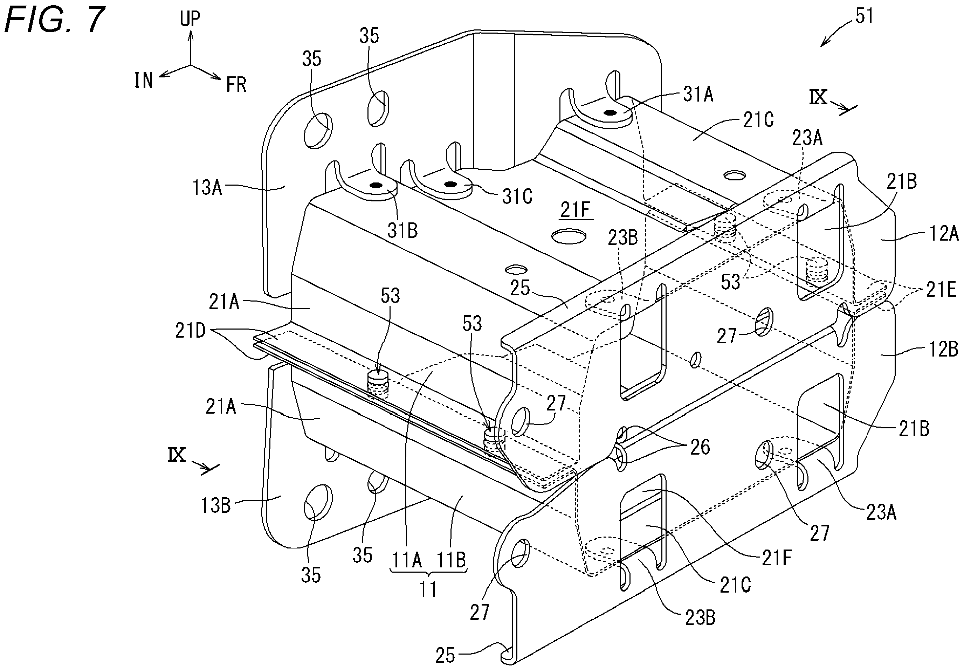

As illustrated in Figs. 7 to 9, as another embodiment, in a crash box 51, it is also possible to join each of the pair of superposed flange portions 21D and the pair of superposed flange portions 21E of the half bodies 11A and 11B by a plurality of flange joining-purpose rivet pins 53, instead of spot welding, in a plurality of places, for example, two places, in the vehicle front-and-rear direction.

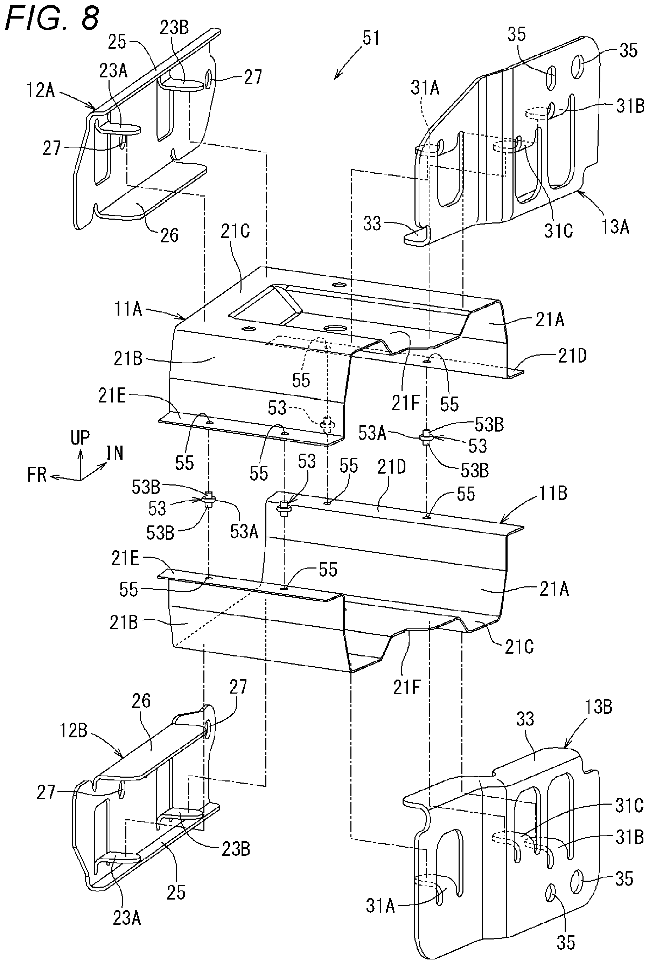

Specifically, as illustrated in Fig. 8, the pair of flange portions 21D and 21E of each of a pair of the half bodies 11A and 11B is each formed with joining-purpose through-holes 55 through each of which a stepped portion 53B of the rivet pin 53 is inserted, in a plurality of places, for example, two places, in the vehicle front-and-rear direction. Moreover, each of the rivet pins 53 includes a thin (for example, approximately 1 mm to 3 mm thick) disk portion 53A and a pair of the stepped portions 53B formed coaxially with a reduced outer diameter at both axial end portions of the disk portion 53A.

The outer diameter of the disk portions 53A is set to be greater than the inner diameter of the joining-purpose through-holes 55 (to be greater by, for example, approximately 2 mm to 7 mm than the inner diameter of the j oining-purpose through-holes 55). Moreover, the pairs of the stepped portions 53B are formed with an outer diameter that allows the pairs of the stepped portions 53B to be inserted through the joining-purpose through-holes 55. Moreover, the length of the pairs of the stepped portions 53B is set to be greater (by, for example, approximately 2 mm to 5 mm) than the plate thickness of the pairs of flange portions 21D and 21E. In other words, the stepped portions 53B are set in such a manner as to protrude (for example, approximately 2 mm to 5 mm) from the joining-purpose through-holes 55 when the stepped portions 53B are inserted through the joining-purpose through-holes 55 and the disk portions 53A come into contact with the surfaces on the opening sides of the pairs of flange portions 21D and 21E.

### [Assembly of Crash Box]

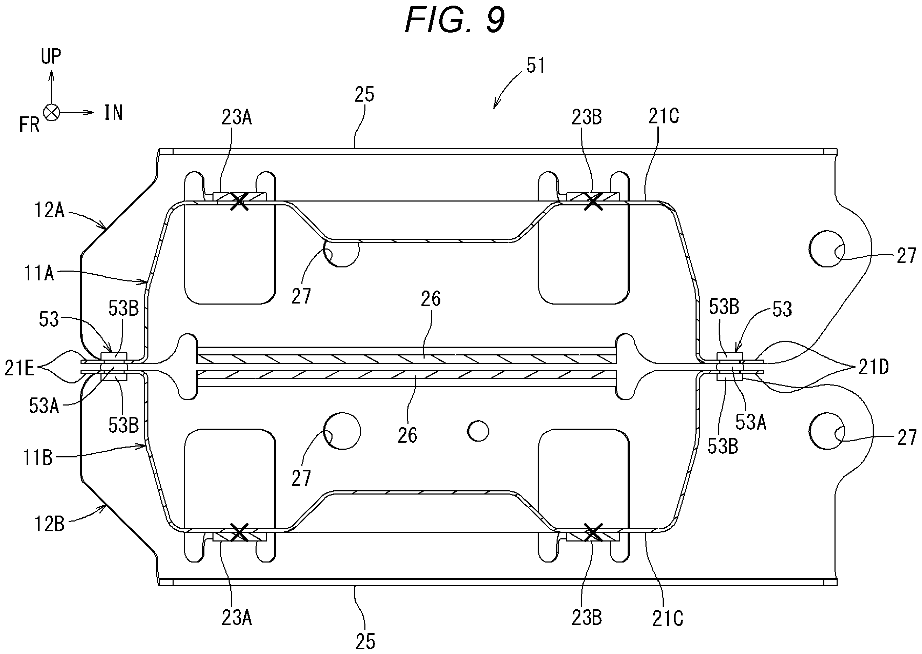

Next, an assembly procedure of the crash box 51 is described with reference to Figs. 8 and 9. As illustrated in Figs. 8 and 9, as in the assembly procedure of the crash box 1, firstly, the front mounting plate 12A to be placed on the upper side is brought into contact with the front end portion of the half body 11A, and the bent pieces 23A and 23B are brought into contact with the outer surfaces of both outer edge portions in the vehicle width direction of the bottom surface portion 21C of the half body 11A. Moreover, the side edge on the outer side in the vehicle width direction of the front mounting plate 12A is caused to face the side edge on the outer side in the vehicle width direction of the flange portion 21E on the outer side in the vehicle width direction of the half body 11A.

Subsequently, the rear mounting plate 13A to be placed on the upper side is brought into contact with the rear end portion of the half body 11A, and the bent pieces 31A and 31B are brought into contact with the outer surfaces of the both outer edge portions in the vehicle width direction of the bottom surface portion 21C of the half body 11A. Moreover, the bent piece 31C of the rear mounting plate 13A is brought into contact with the outer surface of the recessed portion 21F formed in the bottom surface portion 21C. Moreover, the both side edges in the vehicle width direction of the rear mounting plate 13A are caused to face substantially the central portions in the vehicle width direction of the flange portions 21D and 21E of the half body 11A.

The bent pieces 23A and 23B of the front mounting plate 12A are then joined by spot welding to the outer surface of the bottom surface portion 21C of the half body 11A. Moreover, the bent pieces 31A to 31C of the rear mounting plate 13A are joined by spot welding to the outer surfaces of the bottom surface portion 21C and the recessed portion 21F of the half body 11A. Consequently, the semifinished product 37 (refer to Fig. 6) is assembled in which the front mounting plate 12A and the rear mounting plate 13A are welded in such a manner as to cover the front and rear end portions of the half body 11A. Here, in Fig. 9, x marks indicate joint locations by spot welding.

Next, the half body 11B to be placed on the lower side is placed in such a manner that the opening side faces downward. Then, the front mounting plate 12B to be placed on the lower side is brought into contact with the front end portion of the half body 11B, and the bent pieces 23A and 23B are brought into contact with the outer surfaces of both outer edge portions in the vehicle width direction of the bottom surface portion 21C of the half body 11B. Moreover, the side edge on the outer side in the vehicle width direction of the front mounting plate 12B is caused to face the side edge on the outer side in the vehicle width direction of the flange portion 21E on the outer side in the vehicle width direction of the half body 11B.

Subsequently, the rear mounting plate 13B to be placed on the lower side is brought into contact with the rear end portion of the half body 11B, and the bent pieces 31A and 31B are brought into contact with the outer surfaces of the both outer edge portions in the vehicle width direction of the bottom surface portion 21C of the half body 11B. Moreover, the bent piece 31C of the rear mounting plate 13B is brought into contact with the outer surface of the recessed portion 21F formed in the bottom surface portion 21C. Moreover, the both side edges in the vehicle width direction of the rear mounting plate 13B are caused to face substantially the central portions in the vehicle width direction of the flange portions 21D and 21E of the half body 11B.

The bent pieces 23A and 23B of the front mounting plate 12B are then joined by spot welding to the outer surface of the bottom surface portion 21C of the half body 11B. Moreover, the bent pieces 31A to 31C of the rear mounting plate 13B are joined by spot welding to the outer surfaces of the bottom surface portion 21C and the recessed portion 21F of the half body 11B. Consequently, the semifinished product 38 (refer to Fig. 6) is assembled in which the front mounting plate 12B and the rear mounting plate 13B are welded in such a manner as to cover the front and rear end portions of the half body 11B.

After that, as illustrated in Fig. 8, the opening side of the half body 11B forming the semifinished product 38 is placed in such a manner as to face upward, and ones of the stepped portions 53B of the rivet pins 53 are inserted respectively through the joining-purpose through-holes 55 formed in the pair of flange portions 21D and 21E of the half body 11B. With the opening side of the half body 11A forming the semifinished product 37 facing downward, each of the pair of flange portions 21D and the pair of flange portions 21E of the half bodies 11A and 11B is then superposed on each other in such a manner that the others of the stepped portions 53B of the rivet pins 53 are inserted respectively through the joining-purpose through-holes 55 formed in the pair of flange portions 21D and 21E of the half body 11A.

Subsequently, as illustrated in Figs. 7 and 9, the pair of the stepped portions 53B of each of the rivet pins 53 is riveted in the up-and-down direction by an unillustrated riveting apparatus, and the each of the pair of superposed flange portions 21D and the pair of superposed flange portions 21E is joined together in a plurality of places, for example, two places, in the vehicle front-and-rear direction. Consequently, as illustrated in Fig. 7, the crash box 51 is assembled. Here, in Fig. 7, black dots indicate joint locations by spot welding. Moreover, in Fig. 9, x marks indicate joint locations by spot welding.

The crash box 51 described above can be assembled in such a manner that the mounting direction in which the pair of front mounting plates 12A and 12B and the pair of rear mounting plates 13A and 13B are mounted by spot welding on the pair of the half bodies 11A and 11B is the same direction as the mounting direction in which the each of the pair of flange portions 21D and the pair of flange portions 21E of the pair of the half bodies 11A and 11B is superposed on each other and mounted by riveting the rivet pins 53. As a result, the assembly time of the crash box 51 can be reduced, and the manufacturing cost can be reduced.

Moreover, arc welding is not required for the manufacture of the crash box 51, and it is possible to ensure prevention of burn-through caused by arc welding in a thin portion. As a result, the pair of front mounting plates 12A and 12B, the pair of rear mounting plates 13A and 13B, and the pair of the half bodies 11A and 11B, which form the crash box 51, can be thinned (to a plate thickness of, for example, approximately 0.8 mm to 1 mm). Moreover, when the pair of front mounting plates 12A and 12B, the pair of rear mounting plates 13A and 13B, and the pair of the half bodies 11A and 11B are formed of hot-dip galvanized steel sheets or alloyed hot-dip galvanized steel sheets, it is possible to prevent zinc fumes from being generated from the surface of the crash box 51, eliminate the need for the zinc fume removal process, and reduce the manufacturing cost.

### [Joining of Flanges with Rivet Pins and Coupling of Bottom Surface Portions]

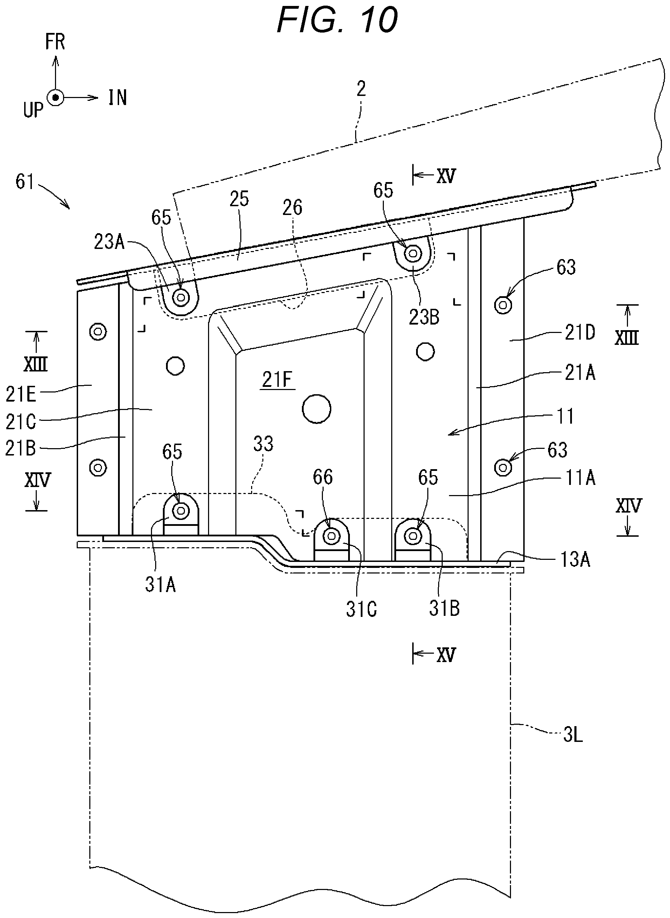

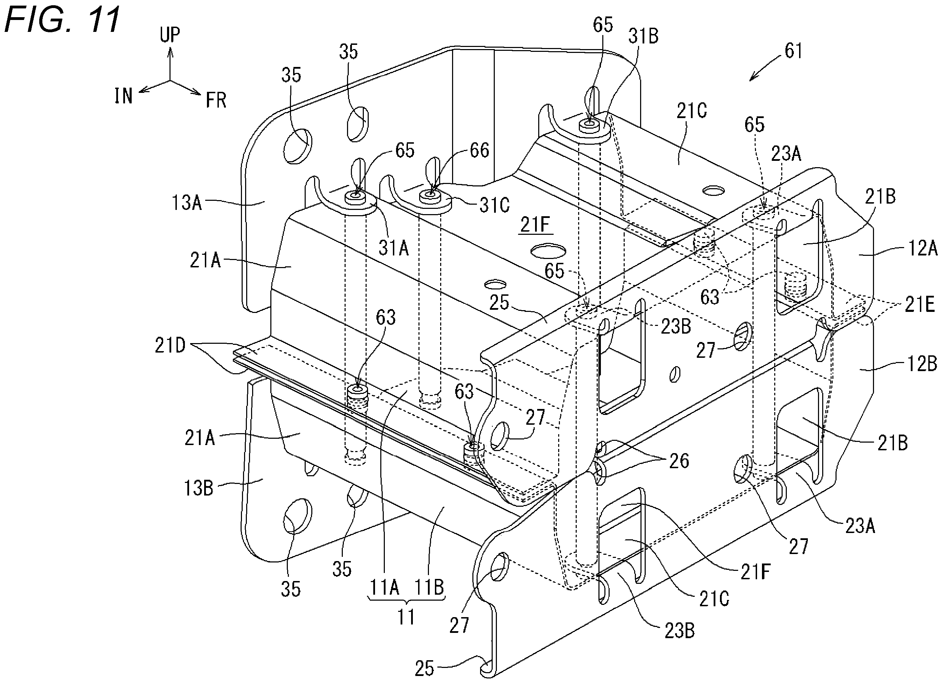

As illustrated in Figs. 10 and 11, as another embodiment, it is also possible to connect the pair of front mounting plates 12A and 12B, the pair of rear mounting plates 13A and 13B, and the pair of the half bodies 11A and 11B with a plurality of bottom surface portion coupling-purpose rivet pins 65 and 66 and a plurality of flange joining-purpose rivet pins 63, instead of spot welding.

Specifically, the pair of front mounting plates 12A and 12B is integrally connected by the bottom surface portion coupling-purpose rivet pins 65, while in contact with the front end portions of the half bodies 11A and 11B, in such a manner as to cover the front end portions of the pair of the half bodies 11A and 11B. Moreover, the pair of rear mounting plates 13A and 13B is integrally connected by the bottom surface portion coupling-purpose rivet pins 65 and 66, while in contact with the rear end portions of the half bodies 11A and 11B, in such a manner as to cover the rear end portions of the pair of the half bodies 11A and 11B. Moreover, the each of the pair of superposed flange portions 21D and the pair of superposed flange portions 21E of the half bodies 11A and 11B is joined together with the flange joining-purpose rivet pins 63 in a plurality of places, for example, two places, in the vehicle front-and-rear direction.

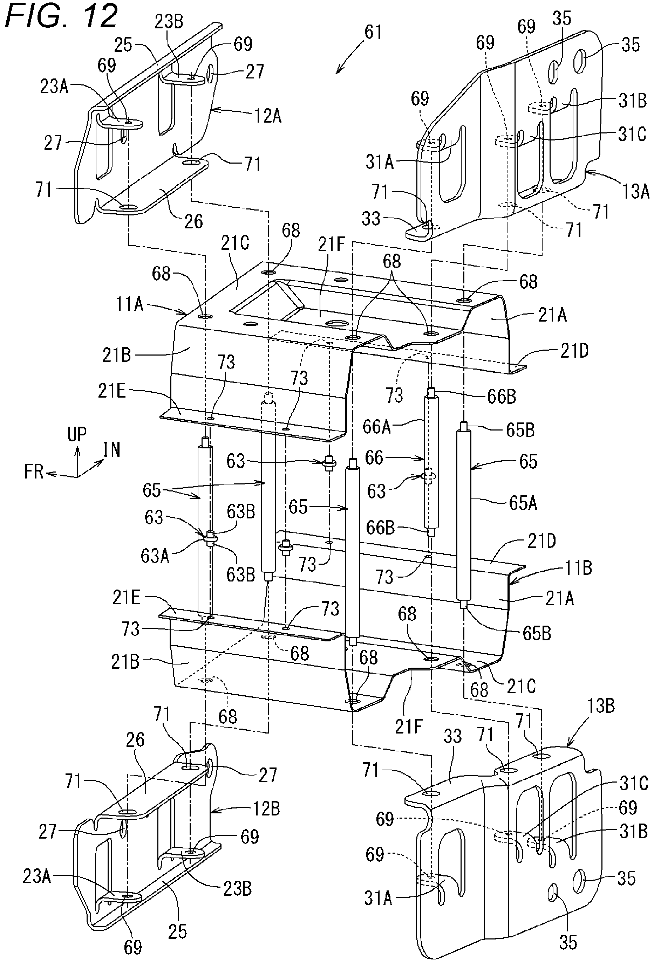

As illustrated in Fig. 12, the pair of flange portions 21D and 21E of each of the pair of the half bodies 11A and 11B is each formed with joining-purpose through-holes 73 through each of which a stepped portion 63B of the rivet pin 63 is inserted, in a plurality of places, for example, two places, in the vehicle front-and-rear direction. Moreover, each of the rivet pins 63 includes a thin (for example, approximately 1 mm to 3 mm thick) disk portion 63A and a pair of the stepped portions 63B formed coaxially with a reduced outer diameter at both axial end portions of the disk portion 63A.

The outer diameter of the disk portions 63A is set to be greater than the inner diameter of the joining-purpose through-holes 73 (to be greater by, for example, approximately 2 mm to 7 mm than the inner diameter of the j oining-purpose through-holes 73). Moreover, the pairs of the stepped portions 63B are formed with an outer diameter that allows the pairs of the stepped portions 63B to be inserted through the joining-purpose through-holes 73. Moreover, the length of the pairs of the stepped portions 63B is set to be greater (by, for example, approximately 2 mm to 5 mm) than the plate thickness of the pairs of flange portions 21D and 21E. In other words, the stepped portions 63B are set in such a manner as to protrude (for example, approximately 2 mm to 5 mm) from the joining-purpose through-holes 73 when the stepped portions 63B are inserted through the joining-purpose through-holes 73 and the disk portions 63A come into contact with the surfaces on the opening sides of the pairs of flange portions 21D and 21E.

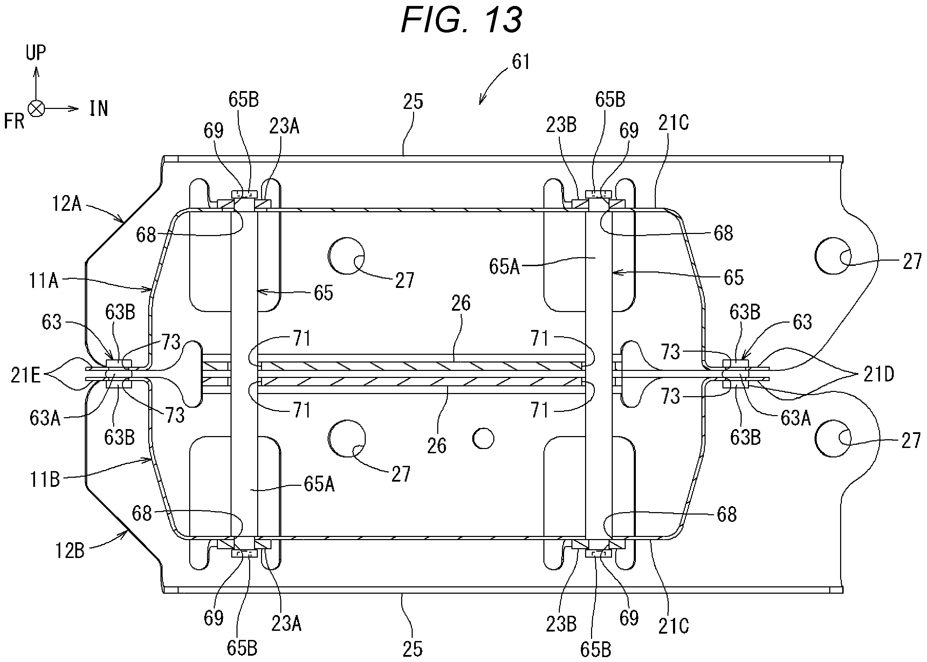

As illustrated in Figs. 12 and 13, the front side edge portions of the bottom surface portions 21C of the pair of the half bodies 11A and 11B are each formed with a pair of first riveting-purpose through-holes 68 through each of which a stepped portion 65B formed at both ends of the rivet pin 65 can be inserted, at positions where the bent pieces 23A and 23B of each of the pair of front mounting plates 12A and 12B come into contact with the outer surface. Moreover, the bent pieces 23A and 23B of the each of the pair of front mounting plates 12A and 12B are formed with a pair of second riveting-purpose through-holes 69 through each of which the stepped portion 65B formed at the both ends of the rivet pin 65 can be inserted, at positions facing the first riveting-purpose through-holes 68 formed in the front side edge portion of the bottom surface portion 21C of each of the pair of the half bodies 11A and 11B.

The reinforcement rib 26 of the each of the pair of front mounting plates 12A and 12B is formed with a pair of support-purpose through-holes 71 through each of which a shaft portion 65A of the rivet pin 65 can be inserted, at positions facing, in the up-and-down direction, the second riveting-purpose through-holes 69 formed in the bent pieces 23A and 23B.

As illustrated in Fig. 12, each of the rivet pins 65 includes the shaft portion 65A formed in a shaft shape that is long in the up-and-down direction, and a pair of the stepped portions 65B formed coaxially with a reduced outer diameter at both axial end portions of the shaft portion 65A. The outer diameter of the shaft portions 65A is set to be greater than the inner diameter of the first riveting-purpose through-holes 68 formed in the bottom surface portions 21C of the pair of the half bodies 11A and 11B (to be greater by, for example, approximately 2 mm to 7 mm than the inner diameter of the first riveting-purpose through-holes 68). As illustrated in Fig. 13, the length of the shaft portions 65A is formed to be substantially equal to a distance between the bottom surface portions 21C that face each other when the pairs of flange portions 21D and 21E superposed on each other of the pair of the half bodies 11A and 11B are joined by the plurality of rivet pins 63.

The length of the pairs of the stepped portions 65B is set to be greater (by, for example, approximately 2 mm to 5 mm) than the total thickness of the plate thickness of the bottom surface portions 21C of the pair of the half bodies 11A and 11B and the plate thickness of the bent pieces 23A and 23B of the pair of front mounting plates 12A and 12B. In other words, the stepped portions 65B are set in such a manner as to protrude (for example, approximately 2 mm to 5 mm) from the second riveting-purpose through-holes 69 when the stepped portions 65B are inserted through the first riveting-purpose through-holes 68 and the second riveting-purpose through-holes 69 and the shaft portions 65A come into contact with the inner surfaces of the bottom surface portions 21C.

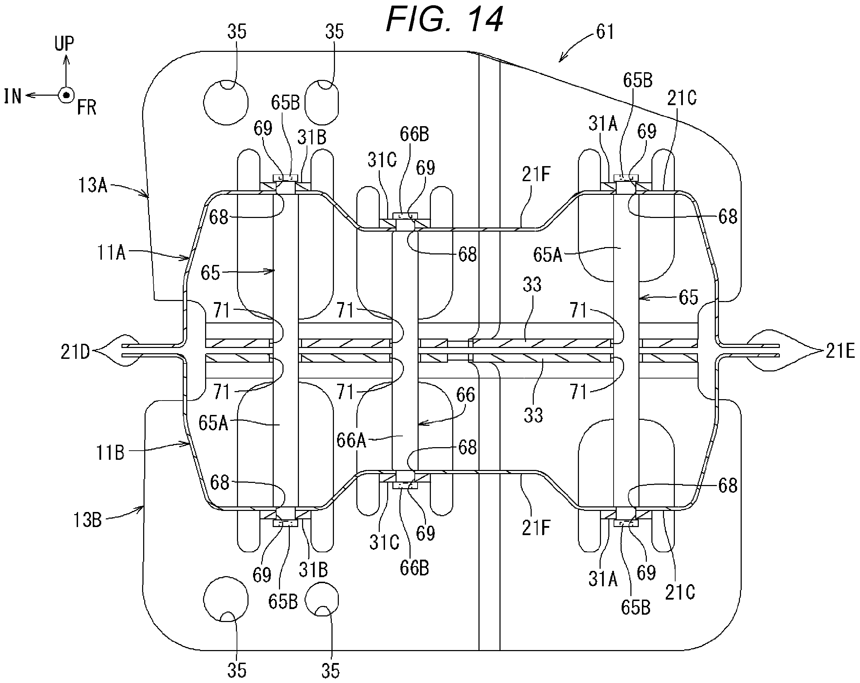

As illustrated in Figs. 12 and 14, the pair of the half bodies 11A and 11B are each formed, at the rear side edge portions of the bottom surface portions 21C, with the pair of first riveting-purpose through-holes 68 through each of which the stepped portion 65B formed at the both ends of the rivet pin 65 can be inserted, at positions where the bent pieces 31A and 31B of each of the pair of rear mounting plates 13A and 13B come into contact with the outer surface. Moreover, the pair of the half bodies 11A and 11B are each formed, at the rear side edge portions of the recessed portions 21F, with the first riveting-purpose through-hole 68 through which a stepped portion 66B formed at both ends of the rivet pin 66 can be inserted, at a position where the bent piece 31C of each of the pair of rear mounting plates 13A and 13B comes into contact with the outer surface.

The bent pieces 31A and 31B of the each of the pair of rear mounting plates 13A and 13B are formed with the pair of second riveting-purpose through-holes 69 through each of which the stepped portion 65B formed at the both ends of the rivet pin 65 can be inserted, at positions facing the first riveting-purpose through-holes 68 formed in the rear side edge portion of the bottom surface portion 21C of the each of the pair of the half bodies 11A and 11B. Moreover, the bent piece 31C of the each of the pair of rear mounting plates 13A and 13B is formed with the second riveting-purpose through-hole 69 through which the stepped portion 66B formed at the both ends of the rivet pin 66 can be inserted, at a position facing the first riveting-purpose through-hole 68 formed in the rear side edge portion of the recessed portion 21F of the each of the pair of the half bodies 11A and 11B.

The reinforcement rib 33 of the each of the pair of rear mounting plates 13A and 13B is formed with three support-purpose through-holes 71 through which the shaft portions 65A and 66A of the rivet pins 65 and 66 can be inserted, at positions facing, in the up-and-down direction, the second riveting-purpose through-holes 69 formed in the bent pieces 31A to 31C.

As illustrated in Fig. 12, each of the rivet pins 66 includes the shaft portion 66A formed in a shaft shape that is long in the up-and-down direction, and a pair of the stepped portions 66B formed coaxially with a reduced outer diameter at both axial end portions of the shaft portion 66A. The outer diameter of the shaft portions 66A is set to be greater than the inner diameter of the first riveting-purpose through-holes 68 formed in the bottom surface portions 21C of the pair of the half bodies 11A and 11B (to be greater by, for example, approximately 3 mm to 7 mm than the inner diameter of the first riveting-purpose through-holes 68). For example, the outer diameter of the shaft portions 66A is set to be substantially the same dimension as the outer diameter of the shaft portions 65A of the rivet pins 65.

As illustrated in Fig. 14, the length of the shaft portions 66A is formed to be substantially equal to a distance between the recessed portions 21F that face each other when the pairs of flange portions 21D and 21E superposed on each other of the pair of the half bodies 11A and 11B are joined by the plurality of rivet pins 63. Moreover, the length of the pairs of the stepped portions 66B is set to be greater (by, for example, approximately 2 mm to 5 mm) than the total thickness of the plate thickness of the bottom surface portions 21C of the pair of the half bodies 11A and 11B and the plate thickness of the bent pieces 31C of the pair of rear mounting plates 13A and 13B.

For example, the length of the pairs of the stepped portions 66B is set to be substantially equal to the length of the pairs of the stepped portions 65B of the rivet pins 65. In other words, the stepped portions 66B are set in such a manner as to protrude (for example, approximately 2 mm to 5 mm) from the second riveting-purpose through-holes 69 when the stepped portions 66B are inserted through the first riveting-purpose through-holes 68 and the second riveting-purpose through-holes 69 and the shaft portions 66A come into contact with the inner surfaces of the recessed portions 21F.

### [Assembly of Crash Box]

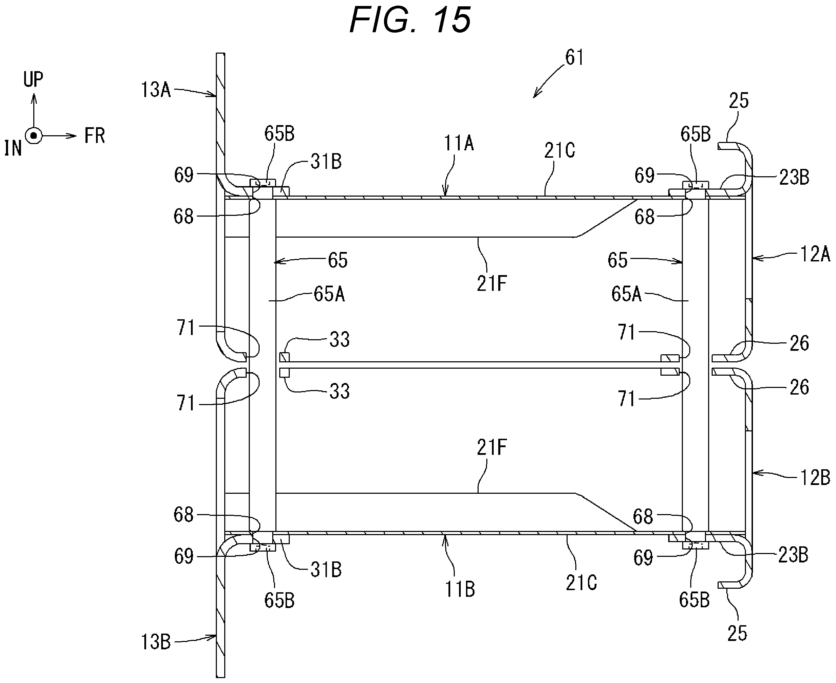

Next, an assembly procedure of a crash box 61 is described with reference to Figs. 12 to 15. As illustrated in Figs. 12 to 15, firstly, the half body 11B to be placed on the lower side is placed in such a manner that the opening side faces upward. Then, the front mounting plate 12B to be placed on the lower side is brought into contact with the front end portion of the half body 11B, and the bent pieces 23A and 23B are brought into contact with the outer surfaces of both outer edge portions in the vehicle width direction of the bottom surface portion 21C of the half body 11B. In this state, the front mounting plate 12B is then positioned, in the vehicle width direction, relative to the half body 11B in such a manner that the first riveting-purpose through-holes 68 formed in the front side edge portion of the bottom surface portion 21C of the half body 11B communicate with the second riveting-purpose through-holes 69 formed respectively in the bent pieces 23A and 23B.

Subsequently, the rear mounting plate 13B to be placed on the lower side is brought into contact with the rear end portion of the half body 11B, and the bent pieces 31A and 31B are brought into contact with the outer surfaces of the both outer edge portions in the vehicle width direction of the bottom surface portion 21C of the half body 11B. Moreover, the bent piece 31C of the rear mounting plate 13B is brought into contact with the outer surface of the recessed portion 21F formed in the bottom surface portion 21C. In this state, the rear mounting plate 13B is then positioned, in the vehicle width direction, relative to the half body 11B in such a manner that the first riveting-purpose through-holes 68 formed in the rear side edge portions of the bottom surface portion 21C and the recessed portion 21F of the half body 11B communicate with the second riveting-purpose through-holes 69 formed respectively in the bent pieces 31A to 31C.

After that, one end sides of the shaft portions 65A of the rivet pins 65 are inserted respectively through the pair of support-purpose through-holes 71 formed in the reinforcement rib 26 of the front mounting plate 12B. The stepped portions 65B formed at the lower end portions of the shaft portions 65A are then inserted through the first riveting-purpose through-holes 68 formed in the bottom surface portion 21C and the second riveting-purpose through-holes 69 formed respectively in the bent pieces 23A and 23B, and the lower ends of the shaft portions 65A are brought into contact with the inner surface of the bottom surface portion 21C.

Moreover, one end sides of the shaft portions 65A of the rivet pins 65 are inserted respectively through the two support-purpose through-holes 71 formed in both end portions in the vehicle width direction of the reinforcement rib 33 of the rear mounting plate 13B. The stepped portions 65B formed at the lower end portions of the shaft portions 65A are then inserted through the first riveting-purpose through-holes 68 formed in the bottom surface portion 21C and the second riveting-purpose through-holes 69 formed respectively in the bent pieces 31A and 31B, and the lower ends of the shaft portions 65A are brought into contact with the inner surface of the bottom surface portion 21C.

Moreover, one end side of the shaft portion 66A of the rivet pin 66 is inserted through the support-purpose through-hole 71 formed in substantially the central portion in the vehicle width direction of the reinforcement rib 33 of the rear mounting plate 13B. The stepped portion 66B formed at the lower end portion of the shaft portion 66A is then inserted through the first riveting-purpose through-hole 68 formed in the recessed portion 21F of the half body 11B and the second riveting-purpose through-hole 69 formed in the bent piece 31C, and the lower end of the shaft portion 66A is brought into contact with the inner surface of the recessed portion 21F.

Moreover, ones of the stepped portions 63B of the rivet pins 63 are inserted respectively through the joining-purpose through-holes 73 formed in the pair of flange portions 21D and 21E of the half body 11B, and the disk portions 63A are brought into contact with the flange portions 21D and 21E.

Subsequently, the half body 11A to be placed on the upper side is placed in such a manner that the opening side faces downward. Then, the front mounting plate 12A to be placed on the upper side is brought into contact with the front end portion of the half body 11A, and the bent pieces 23A and 23B are brought into contact with the outer surfaces of the both outer edge portions in the vehicle width direction of the bottom surface portion 21C of the half body 11A. In this state, the front mounting plate 12A is then positioned, in the vehicle width direction, relative to the half body 11A in such a manner that the first riveting-purpose through-holes 68 formed in the front side edge portion of the bottom surface portion 21C of the half body 11A communicate with the second riveting-purpose through-holes 69 formed respectively in the bent pieces 23A and 23B.

Then, the rear mounting plate 13A to be placed on the upper side is brought into contact with the rear end portion of the half body 11A, and the bent pieces 31A and 31B are brought into contact with the outer surfaces of the both outer edge portions in the vehicle width direction of the bottom surface portion 21C of the half body 11A. Moreover, the bent piece 31C of the rear mounting plate 13A is brought into contact with the outer surface of the recessed portion 21F formed in the bottom surface portion 21C. In this state, the rear mounting plate 13A is then positioned, in the vehicle width direction, relative to the half body 11A in such a manner that the first riveting-purpose through-holes 68 formed in the rear side edge portions of the bottom surface portion 21C and the recessed portion 21F of the half body 11A communicate with the second riveting-purpose through-holes 69 formed respectively in the bent pieces 31A to 31C

Subsequently, the half body 11A with the opening side facing downward is placed directly above the half body 11B in a state where the bent pieces 23A and 23B of the front mounting plate 12A and the bent pieces 31A to 31C of the rear mounting plate 13A are positioned on the outer surfaces of the bottom surface portion 21C and the recessed portion 21F relative to the half body 11A. Then, the half body 11A with the opening side facing downward, the front mounting plate 12A, and the rear mounting plate 13A are integrally lowered downward.

The upper end sides (the other end sides) of the shaft portions 65A of the rivet pins 65 are then inserted respectively through the pair of support-purpose through-holes 71 formed in the reinforcement rib 26 of the front mounting plate 12A, the stepped portions 65B formed at the upper end portions (the other end portions) of the shaft portions 65A are inserted through the first riveting-purpose through-holes 68 formed in the bottom surface portion 21C and the second riveting-purpose through-holes 69 formed respectively in the bent pieces 23A and 23B, and the upper ends (the other ends) of the shaft portions 65A are brought into contact with the inner surface of the bottom surface portion 21C.

Moreover, at the same time, the upper end sides (the other end sides) of the shaft portions 65A of the rivet pins 65 are inserted respectively through the two support-purpose through-holes 71 formed in the both end portions in the vehicle width direction of the reinforcement rib 33 of the rear mounting plate 13B. The stepped portions 65B formed at the upper end portions of the shaft portions 65A are then inserted through the first riveting-purpose through-holes 68 formed in the bottom surface portion 21C and the second riveting-purpose through-holes 69 formed respectively in the bent pieces 31A and 31B, and the upper ends of the shaft portions 65A are brought into contact with the inner surface of the bottom surface portion 21C.

Moreover, the upper end side (the other end side) of the shaft portion 66A of the rivet pin 66 is inserted through the support-purpose through-hole 71 formed in substantially the central portion in the vehicle width direction of the reinforcement rib 33 of the rear mounting plate 13B. The stepped portion 66B formed at the upper end portion of the shaft portion 66A is then inserted through the first riveting-purpose through-hole 68 formed in the recessed portion 21F of the half body 11A and the second riveting-purpose through-hole 69 formed in the bent piece 31C, and the upper end of the shaft portion 66A is brought into contact with the inner surface of the recessed portion 21F.

Moreover, at the same time, the upper stepped portions 63B of the rivet pins 63 placed in the pair of flange portions 21D and 21E of the half body 11B are inserted through the joining-purpose through-holes 73 formed in the pair of flange portions 21D and 21E of the half body 11A. The upper end portions of the disk portions 63A of the rivet pins 63 are then brought into contact with the pair of flange portions 21D and 21E of the half body 11A, and each of the pair of flange portions 21D and the pair of flange portions 21E of the half bodies 11A and 11B is superposed on each other.

After that, as illustrated in Figs. 13 to 15, the pair of the stepped portions 63B formed at the both end portions of each of the rivet pins 63, the pair of the stepped portions 65B formed at the both end portions of each of the rivet pins 65, and the pair of the stepped portions 66B formed at the both end portions of each of the rivet pins 66 are riveted in the up-and-down direction by an unillustrated riveting apparatus for the purpose of joining. Consequently, as illustrated in Fig. 11, the crash box 61 is assembled.

The crash box 61 described above can be assembled in such a manner that the mounting direction in which the pair of front mounting plates 12A and 12B and the pair of rear mounting plates 13A and 13B are mounted on the pair of the half bodies 11A and 11B and riveted with the rivet pins 65 and 66 is the same direction as the mounting direction in which the each of the pair of flange portions 21D and the pair of flange portions 21E of the pair of the half bodies 11A and 11B is superposed on each other and mounted and riveted with the rivet pins 63. As a result, the assembly time of the crash box 61 can be reduced, and the manufacturing cost can be reduced.

Moreover, arc welding is not required for the manufacture of the crash box 61, and it is possible to ensure prevention of burn-through caused by arc welding in a thin portion. As a result, the pair of front mounting plates 12A and 12B, the pair of rear mounting plates 13A and 13B, and the pair of the half bodies 11A and 11B, which form the crash box 61, can be thinned (to a plate thickness of, for example, approximately 0.8 mm to 1 mm). Moreover, when the pair of front mounting plates 12A and 12B, the pair of rear mounting plates 13A and 13B, and the pair of the half bodies 11A and 11B are formed of hot-dip galvanized steel sheets or alloyed hot-dip galvanized steel sheets, it is possible to prevent zinc fumes from being generated from the surface of the crash box 61, eliminate the need for the zinc fume removal process, and reduce the manufacturing cost.

### [Joining of Flanges with Bolts]

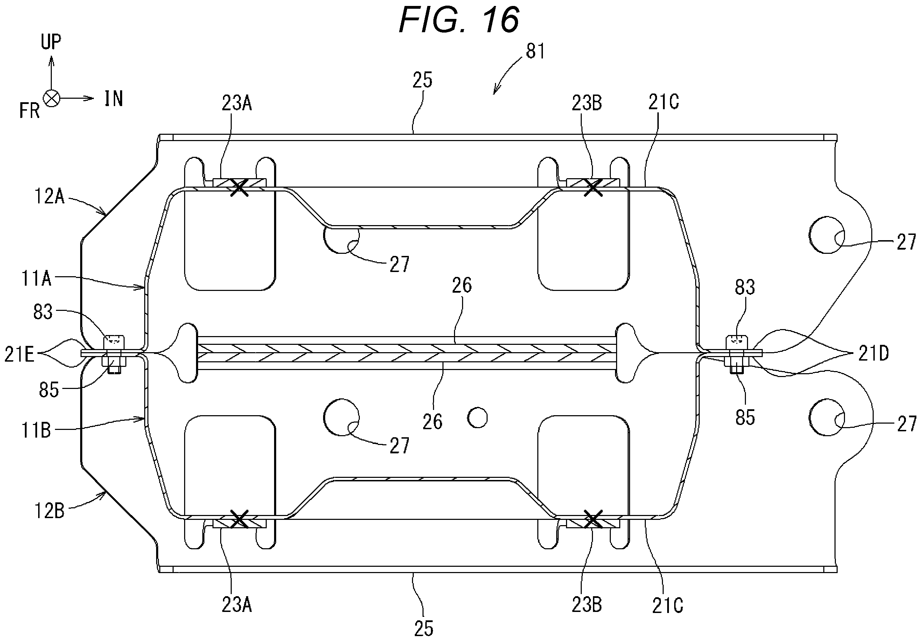

As illustrated in Fig. 16, as another embodiment, the pairs of flange portions 21D and 21E superposed on each other of the half bodies 11A and 11B may be joined together by bolting with hexagon socket head cap screws 83 inserted respectively through the joining-purpose through-holes 55, and nuts 85, instead of the flange joining-purpose rivet pins 53.

Specifically, the opening side of the half body 11B forming the semifinished product 38 (refer to Fig. 6) is placed in such a manner as to face upward. Each of the pair of flange portions 21D and the pair of flange portions 21E of the half bodies 11A and 11B is then superposed on each other in such a manner that the inner surface of the bottom surface portion 21C of the half body 11A forming the semifinished product 37 (refer to Fig. 6) faces the inner surface of the bottom surface portion 21C of the half body 11B forming the semifinished product 38.

The hexagon socket head cap screws 83 are inserted from above respectively through the communicating joining-purpose through-holes 55 of the pairs of flange portions 21D and 21E superposed on each other of the half bodies 11A and 11B, and tightened with the nuts 85 to join the pairs of superposed flange portions 21D and 21E. Consequently, a crash box 81 is assembled.

The crash box 81 described above can be assembled in such a manner that the mounting direction in which the pair of front mounting plates 12A and 12B and the pair of rear mounting plates 13A and 13B are mounted by spot welding on the pair of the half bodies 11A and 11B is the same direction as the mounting direction in which the each of the pair of flange portions 21D and the pair of flange portions 21E of the pair of the half bodies 11A and 11B is superposed on each other and mounted by bolting with the hexagon socket head cap screws 83 and the nuts 85. As a result, the assembly time of the crash box 81 can be reduced, and the manufacturing cost can be reduced.

Moreover, arc welding is not required for the manufacture of the crash box 81, and it is possible to ensure prevention of burn-through caused by arc welding in a thin portion. As a result, the pair of front mounting plates 12A and 12B, the pair of rear mounting plates 13A and 13B, and the pair of the half bodies 11A and 11B, which form the crash box 81, can be thinned (to a plate thickness of, for example, approximately 0.8 mm to 1 mm). Moreover, when the pair of front mounting plates 12A and 12B, the pair of rear mounting plates 13A and 13B, and the pair of the half bodies 11A and 11B are formed of hot-dip galvanized steel sheets or alloyed hot-dip galvanized steel sheets, it is possible to prevent zinc fumes from being generated from the surface of the crash box 81, eliminate the need for the zinc fume removal process, and reduce the manufacturing cost.

### [Crash Box with Lashing Nut]

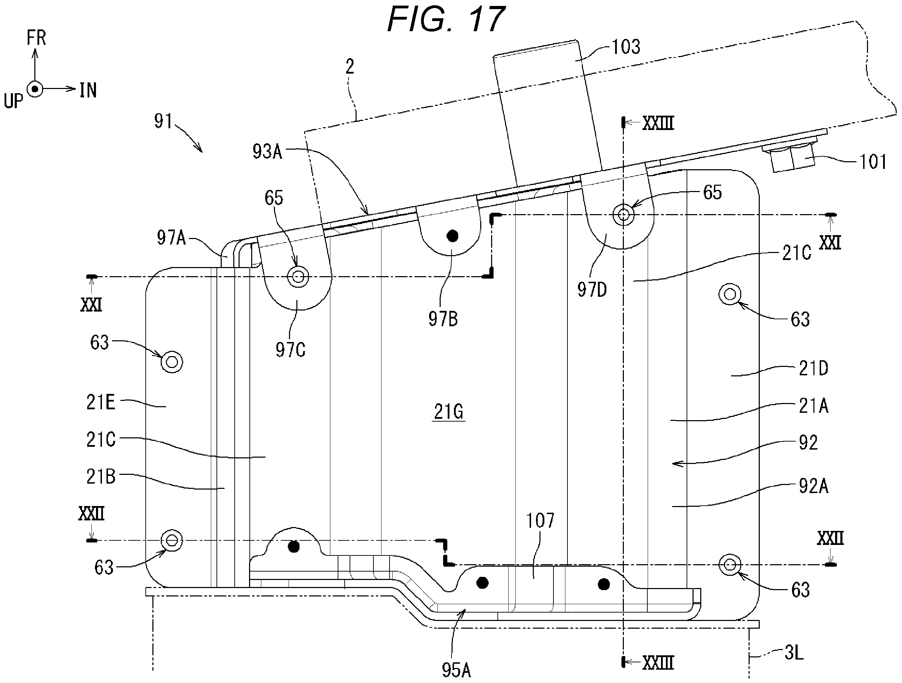

Figs. 17 to 23 illustrate a crash box 91 according to another embodiment. As illustrated in Figs. 17 to 19, the crash box 91 includes a main body portion 92 formed as a hollow tubular body placed with its axis oriented in the vehicle front-and-rear direction, and the main body portion 92 includes a pair of half bodies 92A and 92B having an approximately hat shape in cross section. The pair of half bodies 92A and 92B is integrally connected together by a pair of the bottom surface portion coupling-purpose rivet pins 65 (refer to Fig. 12). Each of the pair of superposed flange portions 21D and the pair of superposed flange portions 21E of the half bodies 92A and 92B is joined together by the flange joining-purpose rivet pins 63 (refer to Fig. 12) in a plurality of places, for example, two places, in the vehicle front-and-rear direction.

The crash box 91 includes a pair of front mounting plates 93A and 93B that are mounted by spot welding, while in contact with the front end portions of the pair of half bodies 92A and 92B, in such a manner as to cover the front end portions. Moreover, the crash box 91 includes a pair of rear mounting plates 95A and 95B that are mounted by spot welding in such a manner as to protrude from the rear side edge portions of the pair of half bodies 92A and 92B in directions away from each other.

The crash box 91 is disposed between the bumper reinforcement 2 and the side member 3L in a position in which the axis of the main body portion 92 forming the tubular body is substantially parallel to the vehicle front-and-rear direction, and is fixed integrally with the bumper reinforcement 2 and the side member 3L by, for example, unillustrated bolts via the pair of front mounting plates 93A and 93B and the pair of rear mounting plates 95A and 95B. Here, in Figs. 17 to 19, black dots indicate joint locations by spot welding. Note that joining may be performed by not limited to spot welding but also welding such as laser welding.

The pair of half bodies 92A and 92B has substantially the same configuration as the half bodies 11A and 11B in Figs. 1 to 6. The half bodies 92A and 92B are formed in approximately hat shapes in cross section that are symmetric with respect to each other in the up-and-down direction, by press forming of steel sheets. For example, alloyed hot-dip galvanized steel sheets or hot-dip galvanized steel sheets can be used. The thickness can be approximately 1.0 mm to 1.6 mm, and the tensile strength can be approximately 590 MPa.

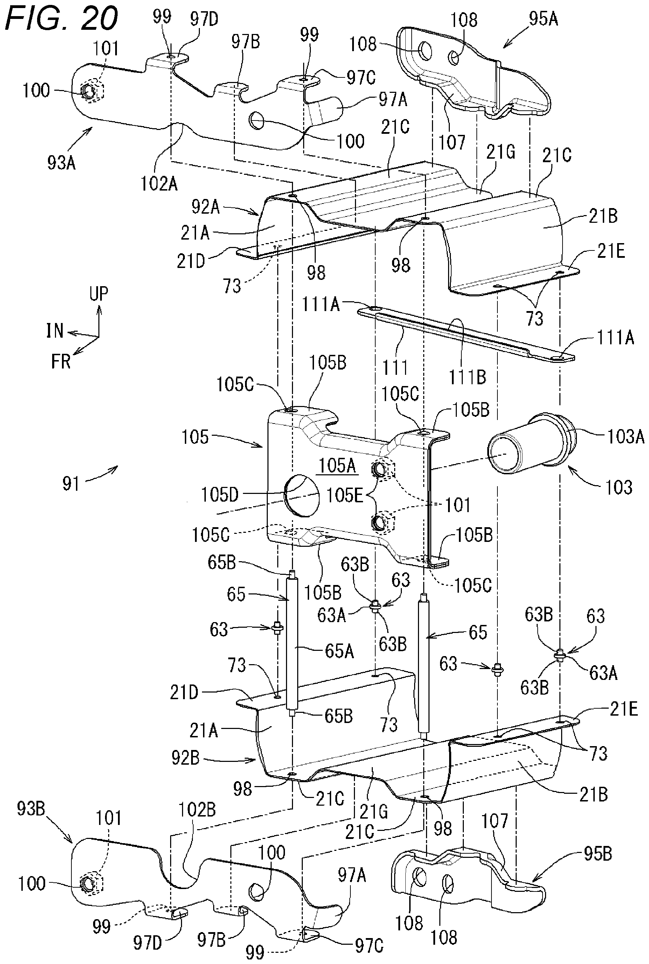

Specifically, as illustrated in Fig. 20, the pair of half bodies 92A and 92B each has the bottom surface portion 21C (refer to Fig. 17) having an approximately trapezoidal shape in plan view, the pair of opposing vertical wall portions 21A and 21B extending from the edges of the bottom surface portion 21C, and the pair of flange portions 21D and 21E extending substantially parallel to the bottom surface portion 21C, from the edges of the pair of vertical wall portions 21A and 21B, that is, the edges on the opening side of the hat shape.

However, the central portion in the vehicle width direction of the bottom surface portion 21C of each of the pair of half bodies 92A and 92B is formed with a recessed portion 21G that has a width of approximately half the total width in the vehicle width direction and is recessed toward the opening side (with a depth of, for example, approximately 10 mm to 20 mm) along the entire width in the vehicle front-and-rear direction. As illustrated in Figs. 17 to 19, the rear edge portion of the each of the pair of half bodies 92A and 92B from substantially the central portion to the outer portion in the vehicle width direction is recessed toward the front of the vehicle. Therefore, the width in the vehicle front-and-rear direction from substantially the central portion to the outer portion in the vehicle width direction is slightly narrower than the width in the vehicle front-and-rear direction from substantially the central portion to the inner portion in the vehicle width direction.

As illustrated in Fig. 20, each of the pairs of flange portions 21D and 21E of the pair of half bodies 92A and 92B is each formed with the joining-purpose through-holes 73 through each of which the stepped portion 63B of the rivet pin 63 is inserted, in a plurality of places, for example, two places, in the vehicle front-and-rear direction. Each of the rivet pins 63 includes the thin (for example, approximately 1 mm to 3 mm thick) disk portion 63A and the pair of the stepped portions 63B formed coaxially with a reduced outer diameter at the both axial end portions of the disk portion 63A.

The outer diameter of the disk portions 63A is set to be greater than the inner diameter of the joining-purpose through-holes 73 (to be greater by, for example, approximately 2 mm to 7 mm than the inner diameter of the j oining-purpose through-holes 73). The pairs of the stepped portions 63B are formed with an outer diameter that allows the pairs of the stepped portions 63B to be inserted through the joining-purpose through-holes 73. The length of the pairs of the stepped portions 63B is set to be greater (by, for example, approximately 2 mm to 5 mm) than the plate thickness of the pairs of flange portions 21D and 21E. In other words, the stepped portions 63B are set in such a manner as to protrude (for example, approximately 2 mm to 5 mm) from the joining-purpose through-holes 73 when the stepped portions 63B are inserted through the joining-purpose through-holes 73 and the disk portions 63A come into contact with the surfaces on the opening sides of the pairs of flange portions 21D and 21E.

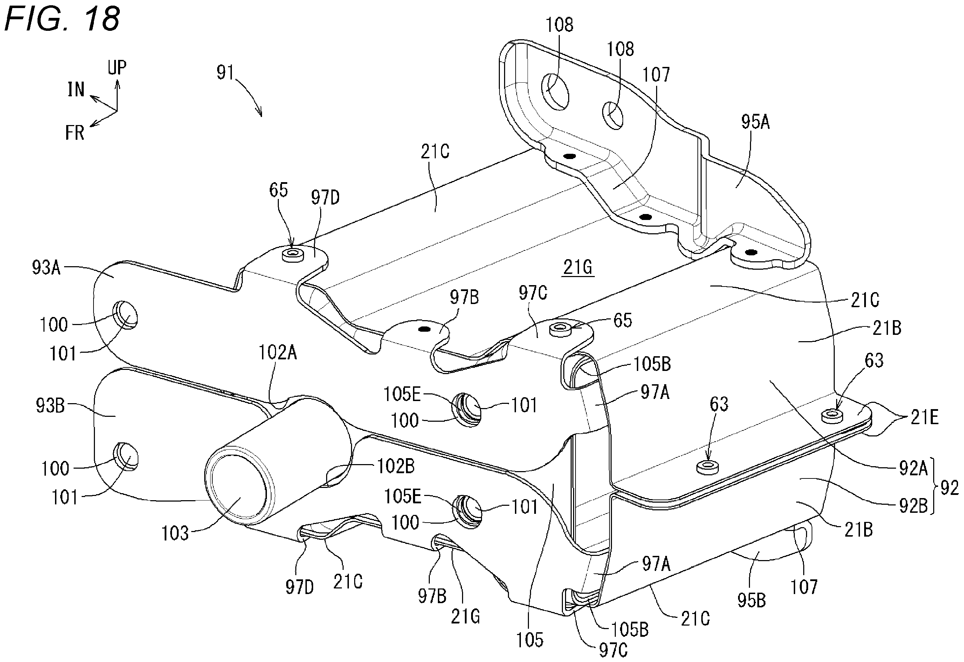

The pair of front mounting plates 93A and 93B is formed in approximately horizontal rectangular flat sheets in front view that are symmetric with respect to each other in the up-and-down direction, by press forming of steel sheets. For example, alloyed hot-dip galvanized steel sheets or hot-dip galvanized steel sheets can be used. The thickness can be approximately 2.0 mm to 2.6 mm, and the tensile strength can be approximately 440 MPa. As illustrated in Figs. 18 to 21 and 23, the side edges on the outer side in the vehicle width direction of the pair of front mounting plates 93A and 93B face the vertical wall portions 21B on the outer side in the vehicle width direction of the pair of half bodies 92A and 92B. The side edges on the inner side in the vehicle width direction of the front mounting plates 93A and 93B extend inward in the vehicle width direction and longer (by, for example, approximately 40 mm to 50 mm) than each of the vertical wall portions 21A on the inner side in the vehicle width direction of the half bodies 92A and 92B.

The upper edges of the pair of front mounting plates 93A and 93B are located at substantially the same height as the height from the pairs of flange portions 21D and 21E to the bottom surface portions 21C of the pair of opposing half bodies 92A and 92B. The portions, which face the recessed portions 21G of the pair of half bodies 92A and 92B, of the side edge portions on the opposite sides of the pair of front mounting plates 93A and 93B are recessed in directions closer to each other along the front edge portions of the recessed portions 21G.

The edge portions on the outer side in the vehicle width direction of the pair of front mounting plates 93A and 93B are each provided with a bent piece 97A that has an L shape in side view and is bent inward (toward the rear of the vehicle) at an approximately right angle. The bent pieces 97A come into contact with the inner side surfaces of the vertical wall portions 21B of the pair of half bodies 92A and 92B. The side edge portions on the opposite sides of the pair of front mounting plates 93A and 93B are each provided, at a position facing substantially the central portion in the vehicle width direction of the recessed portion 21G of each of the pair of half bodies 92A and 92B, with a welding-purpose mounting piece 97B (a spot welding-purpose mounting piece) that has an approximately L shape in side view and is bent rearward at an approximately right angle. The welding-purpose mounting pieces 97B are joined by spot welding to the outer surfaces of the recessed portions 21G.

The side edge portions on the opposite sides of the pair of front mounting plates 93A and 93B are each provided with a pair of riveting-purpose mounting pieces 97C and 97D that have an approximately L shape in side view and are bent rearward at an approximately right angle, in two places of positions facing the bottom surface portions 21C on both sides in the vehicle width direction of the pair of half bodies 92A and 92B. The pairs of riveting-purpose mounting pieces 97C and 97D are joined to the outer surfaces of the bottom surface portions 21C with the rivet pins 65.

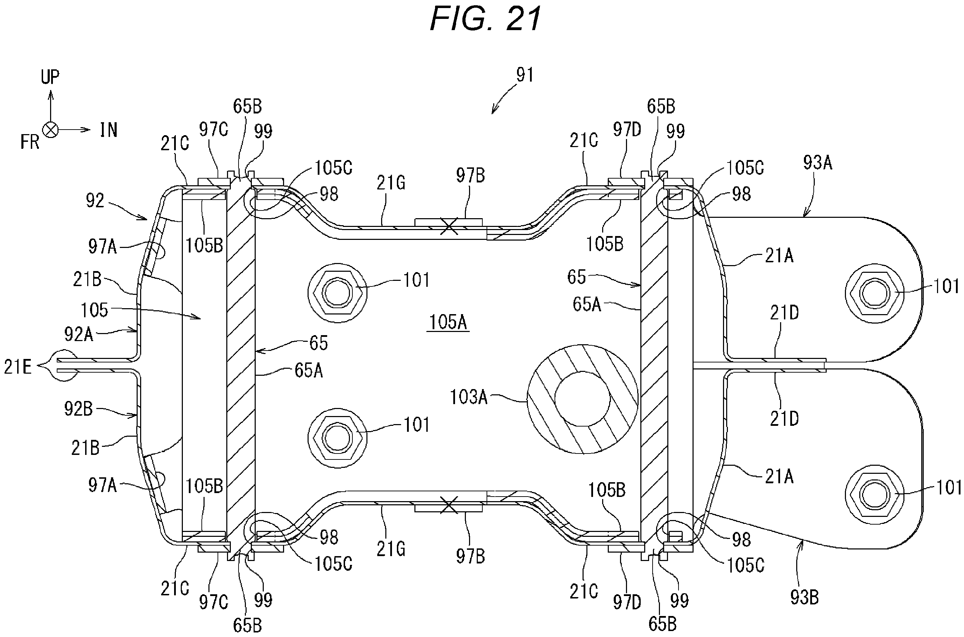

As illustrated in Figs. 20 and 21, the front side edge portions of the bottom surface portions 21C of the pair of half bodies 92A and 92B are each formed with a pair of third riveting-purpose through-holes 98 through each of which the stepped portion 65B formed at both ends of the rivet pin 65 can be inserted, at positions where the riveting-purpose mounting pieces 97C and 97D of each of the pair of front mounting plates 93A and 93B come into contact with the outer surface. The riveting-purpose mounting pieces 97C and 97D of the each of the pair of front mounting plates 93A and 93B are formed with a pair of fourth riveting-purpose through-holes 99 through each of which the stepped portion 65B formed at the both ends of the rivet pin 65 can be inserted, at positions facing the third riveting-purpose through-holes 98 formed in the front side edge portion of the bottom surface portion 21C of the each of the pair of half bodies 92A and 92B.

As illustrated in Fig. 20, each of the rivet pins 65 includes the shaft portion 65A formed in a shaft shape that is long in the up-and-down direction, and the pair of the stepped portions 65B formed coaxially with the reduced outer diameter at both axial end portions of the shaft portion 65A. The outer diameter of the shaft portions 65A is set to be greater than the inner diameter of the third riveting-purpose through-holes 98 formed in the bottom surface portions 21C of the pair of half bodies 92A and 92B (to be greater by, for example, approximately 2 mm to 7 mm than the inner diameter of the third riveting-purpose through-holes 98). As illustrated in Fig. 21, the length of the shaft portions 65A is formed to be substantially equal to a distance between the bottom surface portions 21C that face each other when the pairs of flange portions 21D and 21E superposed on each other of the pair of half bodies 92A and 92B are joined with the plurality of rivet pins 63.

The length of the pairs of the stepped portions 65B is set to be greater (by, for example, approximately 2 mm to 5 mm) than the total thickness of the plate thickness of the bottom surface portions 21C of the pair of half bodies 92A and 92B and the plate thickness of the riveting-purpose mounting pieces 97C and 97D of the pair of front mounting plates 93A and 93B. In other words, the stepped portions 65B are set in such a manner as to protrude (for example, approximately 2 mm to 5 mm) from the fourth riveting-purpose through-holes 99 when the stepped portions 65B are inserted through the third riveting-purpose through-holes 98 and the fourth riveting-purpose through-holes 99 and the shaft portions 65A come into contact with the inner surfaces of the bottom surface portions 21C.

As illustrated in Figs. 18 to 20, the pair of front mounting plates 93A and 93B is each formed with through-holes 100 through each of which an unillustrated bolt can be inserted, at a position outward of the center in the vehicle width direction and at a position of the edge portion inward of the center in the vehicle width direction. Nuts 101 into each of which the unillustrated bolt inserted through the through-hole 100 is screwed are mounted by joining such as arc welding, spot welding, or laser welding on the rear end portions of the through-holes 100 formed in the edge portions on the inner side in the vehicle width direction of the pair of front mounting plates 93A and 93B.

### [Lashing Nut]

As illustrated in Figs. 17 and 18, the adjacent side edge portions of the pair of front mounting plates 93A and 93B are formed with nut insertion-purpose notch portions 102A and 102B cut in an approximately semicircular shape in directions away from each other. The nut insertion-purpose notch portions 102A and 102B are provided at positions facing the bottom surface portions 21C of the pair of half bodies 92A and 92B, and an approximately cylindrical lashing nut 103 is inserted from inside the main body portion 92 toward the front. The lashing nut 103 protrudes (for example, approximately 5 mm to 20 mm) from the bumper reinforcement 2 toward the front of the vehicle, and a screw portion of a hook for hanging a rope for towing/lashing to move the vehicle is screwed into the lashing nut 103 and mounted therein.

As illustrated in Figs. 20, 21, and 23, the lashing nut 103 is mounted on a lashing nut mounting plate 105 that has an approximately horizontal rectangular shape in front view and is placed behind the pair of front mounting plates 93A and 93B. The lashing nut mounting plate 105 has a shape substantially the same as the cross-sectional shape of the front end portion of the main body portion 92 that is the hollow tubular body, and includes a flat plate portion 105A whose side edge portions on opposite sides are in contact with, or in close proximity to, the inner surfaces of the bottom surface portions 21C and the recessed portions 21G.

The side edge portions on the opposite sides of the flat plate portion 105A are formed with four second support-purpose mounting pieces 105B that are bent rearward from both end portions in the vehicle width direction at an approximately right angle in such a manner as to face the bottom surface portions 21C of the pair of half bodies 92A and 92B and that are in contact with the inner surfaces of the bottom surface portions 21C. The second support-purpose mounting pieces 105B face the riveting-purpose mounting pieces 97C and 97D of the pair of front mounting plates 93A and 93B, the riveting-purpose mounting pieces 97C and 97D being placed on the outer surfaces of the bottom surface portions 21C of the pair of half bodies 92A and 92B. Therefore, two pairs (a plurality of pairs) of the second support-purpose mounting pieces 105B are provided in such a manner as to face each other in the up-and-down direction.

The second support-purpose mounting pieces 105B are formed respectively with second support-purpose through-holes 105C through each of which the shaft portion 65A of the rivet pin 65 can be inserted and that are formed coaxially in the up-and-down direction, at positions facing each of the third riveting-purpose through-holes 98 formed in the bottom surface portions 21C of the pair of half bodies 92A and 92B. The flat plate portion 105A is formed with a through-hole 105D through which the lashing nut 103 is inserted from the rear to bring a flange portion 103A into contact with the rear end portion of the flat plate portion 105A. The through-hole 105D is formed at a position facing each of the nut insertion-purpose notch portions 102A and 102B of the pair of front mounting plates 93A and 93B.

The lashing nut 103 is inserted in advance through the through-hole 105D from the rear, and the flange portion 103A is joined to the flat plate portion 105A by, for example, arc welding, spot welding, or laser welding. The flat plate portion 105A is formed with through-holes 105E through each of which the unillustrated bolt can be inserted, respectively at positions facing the through-holes 100 on the outer side in the vehicle width direction of the pair of front mounting plates 93A and 93B.

The nuts 101 into each of which the unillustrated bolt inserted through the through-hole 105E is screwed are mounted respectively on the rear end portions of the through-holes 105E by joining such as arc welding, spot welding, or laser welding. Therefore, the crash box 91 is integrally assembled to the bumper reinforcement 2 by bolting with the nuts 101 welded to the edge portions on the inner side in the vehicle width direction of the pair of front mounting plates 93A and 93B and the nuts 101 welded to the through-holes 105E in the lashing nut mounting plate 105.

The pair of rear mounting plates 95A and 95B is formed by press forming of steel sheets. For example, alloyed hot-dip galvanized steel sheets or hot-dip galvanized steel sheets can be used. The thickness can be approximately 2.0 mm to 2.6 mm, and the tensile strength can be approximately 440 MPa. The thickness of the pair of rear mounting plates 95A and 95B can be set to be substantially the same as the thickness of the pair of front mounting plates 93A and 93B. As illustrated in Figs. 17 to 20, 22, and 23, the pair of rear mounting plates 95A and 95B has approximately horizontal rectangular shapes in front view that are symmetric with respect to each other in the up-and-down direction, and the adjacent side edge portions are in contact with the outer surfaces of the bottom surface portions 21C and the recessed portions 21G along substantially the entire lengths.

The height of the pair of rear mounting plates 95A and 95B from the bottom surface portions 21C decreases progressively from the central portions in the vehicle width direction toward the outer side in the vehicle width direction. The pair of rear mounting plates 95A and 95B is formed in an approximately crank shape in plan view by bending substantially the central portions to the outer portions in the vehicle width direction toward the front of the vehicle in such a manner that substantially the central portions to the outer portions in the vehicle width direction can come into contact with the outer surfaces of the rear edge portions of the corresponding half bodies 92A and 92B of the pair.

The length in the vehicle width direction of the pair of rear mounting plates 95A and 95B is formed to be equal to the distance from positions facing the proximal end portions of the flange portions 21D on the inner side in the vehicle width direction of the pair of half bodies 92A and 92B to the side edge portions on the outer side in the vehicle width direction of the bottom surface portions 21C. The width in the up-and-down direction of the pair of rear mounting plates 95A and 95B is approximately two-thirds the height in the up-and-down direction from the pairs of flange portions 21D and 21E to the bottom surface portions 21C of the pair of half bodies 92A and 92B. The adjacent side edge portions of the pair of rear mounting plates 95A and 95B protrude in a horizontal trapezoidal shape in directions closer to each other in such a manner as to come into contact with the outer surfaces of the recessed portions 21G.

As illustrated in Fig. 20, the pair of rear mounting plates 95A and 95B is each formed with a mounting rib portion 107 bent forward at an approximately right angle from a side edge portion on the inner side in the vehicle width direction to the side edge portion adjacent to the side edge portion of the other rear mounting plate. As illustrated in Figs. 17 and 20, the mounting rib portions 107 are formed with a width dimension that allows the mounting rib portions 107 to be spot welded to the bottom surface portions 21C and the recessed portions 21G, which come into contact with the mounting rib portions 107, at positions facing the bottom surface portions 21C and the edge portions on the inner side in the vehicle width direction of the recessed portions 21G of the pair of half bodies 92A and 92B.

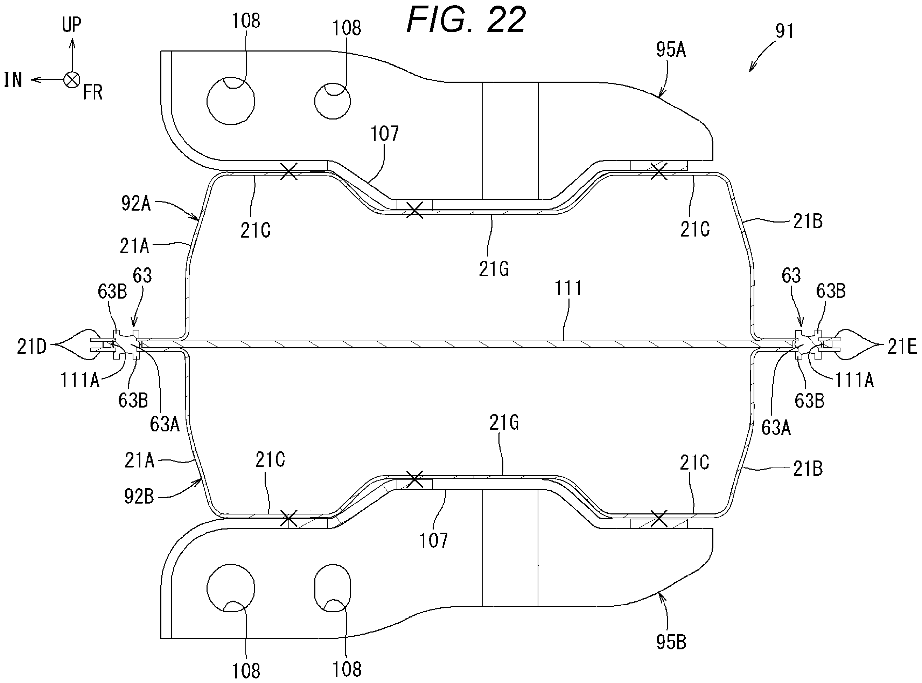

As illustrated in Figs. 20 and 22, the pair of rear mounting plates 95A and 95B are each formed, in portions facing the bottom surface portions 21C on the inner side in the vehicle width direction of the pair of half bodies 92A and 92B, with two through-holes 108 along the vehicle width direction, allowing a spacing substantially equal to the width of the opposing bottom surface portions 21C, at a position of substantially the central portion in the vehicle up-and-down direction. An unillustrated bolt is inserted through each of the through-holes 108 from the front, and is integrally assembled by bolting to the side member 3L.

### [Tension Plate]

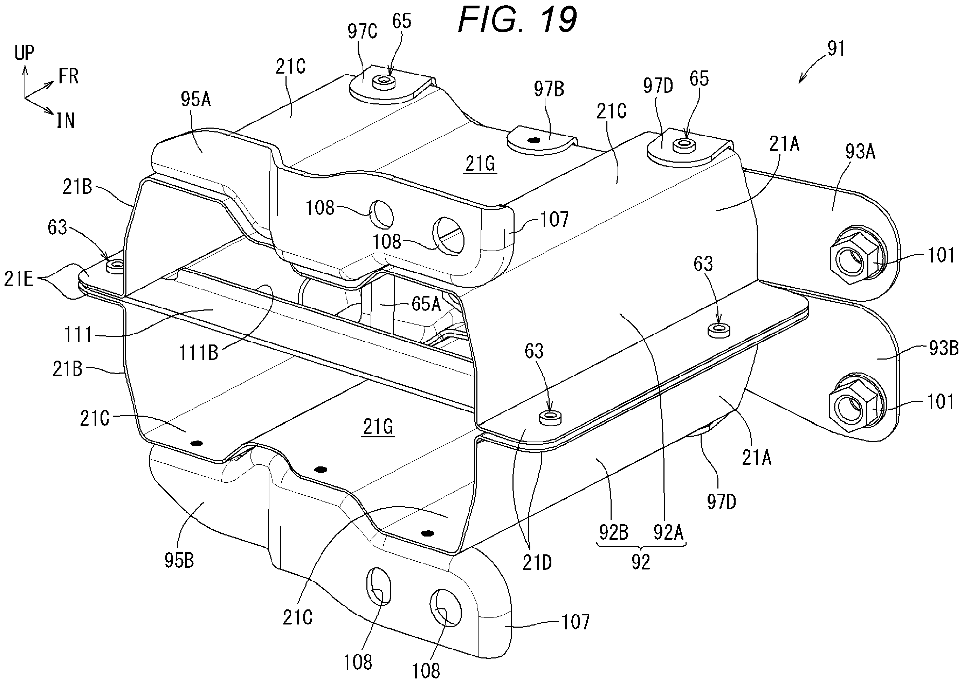

As illustrated in Figs. 19, 20, 22, and 23, an elongated tension plate 111 is fixed on the rear side of the pair of half bodies 92A and 92B, with both end portions of the tension plate 111 sandwiched between the flange portions 21D and 21E, and placed along the vehicle width direction. The tension plate 111 is formed in a long slender, approximately rectangular shape in plan view, by press forming of a steel sheet. For example, a rolled steel sheet for general structure can be used. The thickness can be approximately 2.0 mm to 2.6 mm, and the tensile strength can be approximately 330 MPa to 540 MPa. The thickness of the tension plate 111 is set to be substantially the same as the thickness of the disk portions 63A of the rivet pins 63.

As illustrated in Figs. 19 and 22, the length of the tension plate 111 is set to be slightly less than the distance between the side edge portions on both outer sides in the vehicle width direction of the flange portions 21D and 21E of the pair of half bodies 92A and 92B. Both end portions in the length direction of the tension plate 111 are formed with a pair of mounting-purpose through-holes 111A, respectively at positions facing the j oining-purpose through-holes 73 provided on the rear side of the pairs of flange portions 21D and 21E of the pair of half bodies 92A and 92B. The pair of mounting-purpose through-holes 111A is formed with a diameter that allows the disk portions 63A of the rivet pins 63 to be inserted through the pair of mounting-purpose through-holes 111A.

As illustrated in Figs. 19, 20, and 23, the tension plate 111 is provided, at its front side edge portion, with a narrow reinforcement rib 111B bent upward at an approximately right angle along the entire length of a portion between the pairs of vertical wall portions 21A and 21B when the tension plate 111 is placed between the pairs of flange portions 21D and 21E. Note that the reinforcement rib 111B may be bent downward at an approximately right angle.

### [Assembly of Crash Box]

Next, an assembly procedure of the crash box 91 is described with reference to Figs. 20 to 23. As illustrated in Figs. 20 to 23, firstly, the front mounting plate 93A to be placed on the upper side is brought into contact with the front end portion of the half body 92A that is placed in such a manner that the opening side faces downward. Then, the bent piece 97A of the front mounting plate 93A is brought into contact with the inner surface of the vertical wall portion 21B on the outer side in the vehicle width direction, and the welding-purpose mounting piece 97B is brought into contact with the outer surface of the front end portion of the recessed portion 21G of the half body 92A.

Moreover, the pair of riveting-purpose mounting pieces 97C and 97D of the front mounting plate 93A is brought into contact with the outer surfaces of the front end portions of the bottom surface portions 21C of the half body 92A, respectively, and placed and positioned in such a manner that the fourth riveting-purpose through-holes 99 in the riveting-purpose mounting pieces 97C and 97D communicate with the third riveting-purpose through-holes 98 in the bottom surface portions 21C, respectively. The mounting rib portion 107 of the rear mounting plate 95A to be placed on the upper side is subsequently brought into contact with the outer surfaces of the bottom surface portions 21C and the recessed portion 21G, and placed and positioned along the rear side edge portion of the half body 92A.

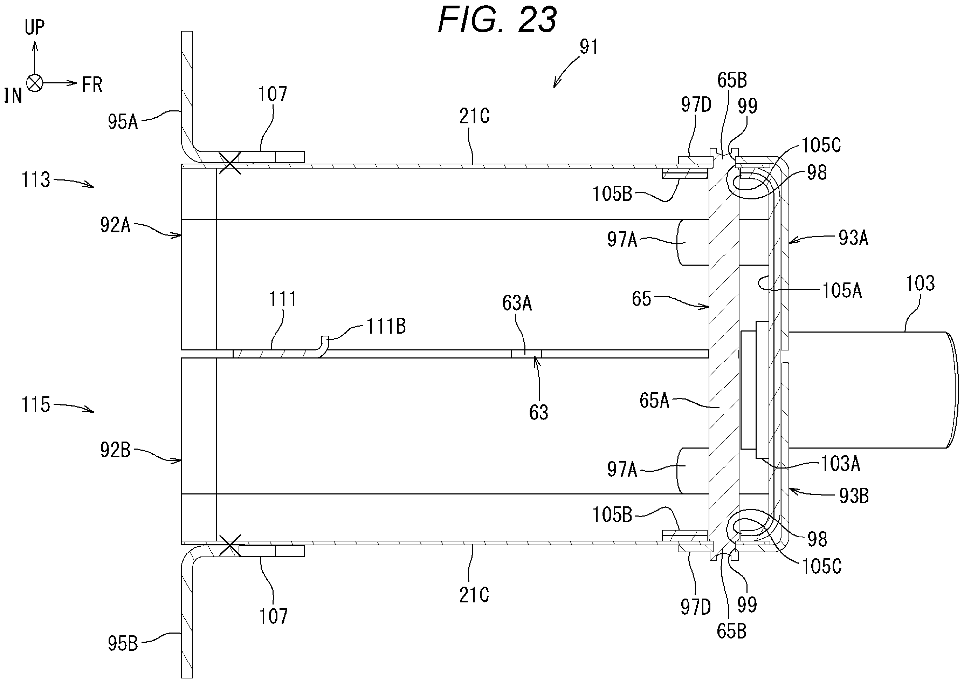

In this state, the welding-purpose mounting piece 97B of the front mounting plate 93A is then joined by spot welding to the outer surface of the recessed portion 21G of the half body 92A. Moreover, the mounting rib portion 107 of the rear mounting plate 95A is joined by spot welding to the outer surfaces of the bottom surface portions 21C and the recessed portion 21G of the half body 92A. Consequently, a semifinished product 113 (refer to Fig. 23) is assembled in which the front mounting plate 93A is mounted in such a manner as to cover the front end portion of the half body 92A and in which the rear mounting plate 95A is mounted in such a manner as to protrude from the outer surface of the rear side edge portion of the half body 92A in a direction away from each other. Here, in Figs. 21 to 23, x marks indicate joint locations by spot welding.

Next, the half body 92B to be placed on the lower side is placed in such a manner that the opening side faces downward. The front mounting plate 93B to be placed on the lower side is then brought into contact with the front end portion of the half body 92B. Then, the bent piece 97A of the front mounting plate 93B is brought into contact with the inner surface of the vertical wall portion 21B on the outer side in the vehicle width direction, and the welding-purpose mounting piece 97B is brought into contact with the outer surface of the front end portion of the recessed portion 21G of the half body 92B.

Moreover, the pair of riveting-purpose mounting pieces 97C and 97D of the front mounting plate 93B is brought into contact with the outer surfaces of the front end portions of the bottom surface portions 21C of the half body 92B, respectively, and placed and positioned in such a manner that the fourth riveting-purpose through-holes 99 in the riveting-purpose mounting pieces 97C and 97D communicate with the third riveting-purpose through-holes 98 in the bottom surface portions 21C, respectively. Subsequently, the mounting rib portion 107 of the rear mounting plate 95B to be placed on the lower side is brought into contact with the outer surfaces of the bottom surface portions 21C and the recessed portion 21G, and placed and positioned along the rear side edge portion of the half body 92B.

In this state, the welding-purpose mounting piece 97B of the front mounting plate 93B is then joined by spot welding to the outer surface of the recessed portion 21G of the half body 92B. Moreover, the mounting rib portion 107 of the rear mounting plate 95B is joined by spot welding to the outer surfaces of the bottom surface portions 21C and the recessed portion 21G of the half body 92B. Consequently, a semifinished product 115 (refer to Fig. 23) is assembled in which the front mounting plate 93B is mounted in such a manner as to cover the front end portion of the half body 92B and in which the rear mounting plate 95B is mounted in such a manner as to protrude from the outer surface of the rear side edge portion of the half body 92B in a direction away from each other. Here, in Figs. 21 to 23, x marks indicate joint locations by spot welding.

After that, the semifinished product 115 to be placed on the lower side is placed in such a manner that the opening side of the half body 92B faces upward. The stepped portions 65B formed at one end portions (the lower end portions) of a pair of the rivet pins 65 are inserted respectively through the third riveting-purpose through-holes 98 formed in the front edge portions of the bottom surface portions 21C of the half body 92B and the fourth riveting-purpose through-holes 99 formed in the riveting-purpose mounting pieces 97D of the front mounting plate 93B to bring the lower ends of the shaft portions 65A into contact with the inner surfaces of the bottom surface portions 21C.

Subsequently, the shaft portions 65A of the rivet pins 65 are inserted through the second support-purpose through-holes 105C formed in the second support-purpose mounting pieces 105B, which face each other in the up-and-down direction, in the lashing nut mounting plate 105 where the lashing nut 103 has been welded to the end portion at the rear of the through-hole 105D relative to the vehicle. Then, the lower side edge portion of the lashing nut mounting plate 105 is brought into contact with the inner surface of the front side edge portion of the half body 92B, and the lashing nut 103 is caused to protrude forward from the nut insertion-purpose notch portion 102B of the front mounting plate 93B. Moreover, the stepped portions 65B protrude upward from the upper second support-purpose through-holes 105C in the lashing nut mounting plate 105.

Moreover, ones of the stepped portions 63B of the rivet pins 63 are inserted respectively through the joining-purpose through-holes 73 formed in the pair of flange portions 21D and 21E of the half body 92B, and the disk portions 63A are brought into contact with the flange portions 21D and 21E. The pair of mounting-purpose through-holes 111A formed in the both end portions in the longitudinal direction of the tension plate 111 is then placed, and inserted through the disk portions 63A of the rivet pins 63 placed on the rear sides of the pair of flange portions 21D and 21E.

Subsequently, the semifinished product 113 to be placed on the upper side is placed directly above the half body 92B opening upward with the opening side of the half body 92A facing downward. Then, the semifinished product 113 with the opening side of the half body 92A facing downward is then lowered downward, and the stepped portions 65B protruding from the upper second support-purpose through-holes 105C in the lashing nut mounting plate 105 are inserted through the third riveting-purpose through-holes 98 formed in the front edge portions of the bottom surface portions 21C of the half body 92A.

Subsequently, the semifinished product 113 is lowered further downward, and the stepped portions 65B inserted respectively through the third riveting-purpose through-holes 98 are inserted respectively through the fourth riveting-purpose through-holes 99 formed in the riveting-purpose mounting pieces 97C and 97D of the front mounting plate 93A, and the upper ends of the shaft portions 65A are brought into contact with the inner surfaces of the bottom surface portions 21C of the half body 92A.

Moreover, at the same time, the upper stepped portions 63B of the rivet pins 63 placed in the pair of flange portions 21D and 21E of the half body 92B are inserted through the joining-purpose through-holes 73 formed in the pair of flange portions 21D and 21 E of the half body 92A. The upper end portions of the disk portions 63A of the rivet pins 63 are then brought into contact with the pair of flange portions 21D and 21E of the half body 92A, and each of the pair of flange portions 21D and the pair of flange portions 21E of the half bodies 92A and 92B is superposed on each other.

After that, as illustrated in Figs. 21 to 23, the pair of the stepped portions 63B formed at the both end portions of each of the rivet pins 63, and the pair of the stepped portions 65B formed at the both end portions of each of the rivet pins 65 are riveted in the up-and-down direction by an unillustrated riveting apparatus for the purpose of joining. Consequently, as illustrated in Figs. 18 and 19, the crash box 91 is assembled.

The crash box 91 described above can be assembled in such a manner that the mounting direction in which the welding-purpose mounting pieces 97B of the pair of front mounting plates 93A and 93B and the mounting rib portions 107 of the pair of rear mounting plates 95A and 95B are mounted by spot welding on the pair of half bodies 92A and 92B is the same direction as the mounting direction in which the each of the pair of flange portions 21D and the pair of flange portions 21E of the pair of half bodies 92A and 92B is superposed on each other, and mounted and riveted with the pair of the rivet pins 65 and the plurality of rivet pins 63. As a result, the assembly time of the crash box 91 can be reduced, and the manufacturing cost can be reduced.

Moreover, arc welding is not required for the manufacture of the crash box 91, and it is possible to ensure prevention of burn-through caused by arc welding in a thin portion. As a result, the pair of front mounting plates 93A and 93B, the pair of rear mounting plates 95A and 95B, and the pair of half bodies 92A and 92B, which form the crash box 91, can be thinned (to a plate thickness of, for example, approximately 0.8 mm to 1 mm). Moreover, when the pair of front mounting plates 93A and 93B, the pair of rear mounting plates 95A and 95B, and the pair of half bodies 92A and 92B are formed of hot-dip galvanized steel sheets or alloyed hot-dip galvanized steel sheets, it is possible to prevent zinc fumes from being generated from the surface of the crash box 91, eliminate the need for the zinc fume removal process, and reduce the manufacturing cost.

Moreover, the mechanical strength at the front end portion of the crash box 91 can be reinforced by the lashing nut mounting plate 105 that is placed at the front end portion of the hollow tubular body formed by the pair of half bodies 92A and 92B and supported by the pair of the rivet pins 65. As a result, the pair of front mounting plates 93A and 93B, the pair of rear mounting plates 95A and 95B, and the pair of half bodies 92A and 92B, which form the crash box 91, can be thinned, and the manufacturing cost can be reduced.

Moreover, the pair of half bodies 92A and 92B is superposed on each other with the tension plate 111 sandwiched between the pairs of flange portions 21D and 21E, and joined together by riveting the rivet pins 63 inserted respectively through the both end portions of the tension plate 111. Consequently, the tension plate 111 placed in the vehicle width direction can reinforce the mechanical strength in the vehicle width direction at the rear end portion of the crash box 91. As a result, the pair of front mounting plates 93A and 93B, the pair of rear mounting plates 95A and 95B, and the pair of half bodies 92A and 92B, which form the crash box 91, can be thinned, and the manufacturing cost can be reduced.

### [Omission of Lashing Nut]

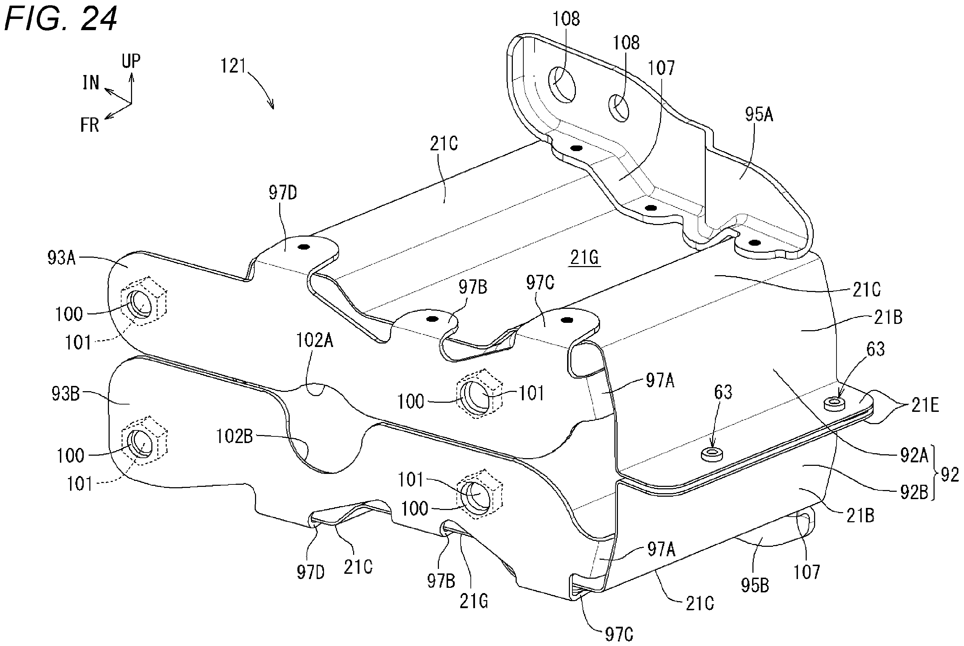

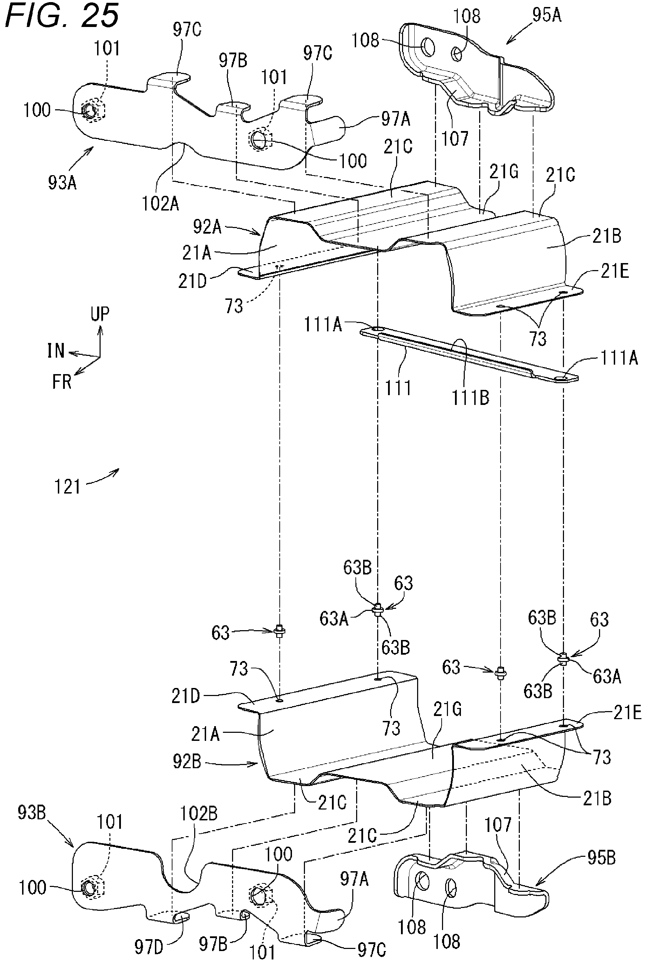

As illustrated in Figs. 24 and 25, as another embodiment, it is also possible to omit the lashing nut 103, the lashing nut mounting plate 105, and the bottom surface portion coupling-purpose rivet pins 65 from a crash box 121.

Accordingly, the pair of half bodies 92A and 92B is not each formed with the pair of third riveting-purpose through-holes 98 through each of which the stepped portion 65B formed at both ends of the rivet pin 65 can be inserted, in the front side edge portions of their respective bottom surface portions 21C. The riveting-purpose mounting pieces 97C and 97D of the pair of front mounting plates 93A and 93B are not each formed with the pair of fourth riveting-purpose through-holes 99 through each of which the stepped portion 65B formed at the both ends of the rivet pin 65 can be inserted. Note that the nut insertion-purpose notch portions 102A and 102B of the pair of front mounting plates 93A and 93B may not be formed.

As illustrated in Fig. 24, the welding-purpose mounting pieces 97B and the riveting-purpose mounting pieces 97C and 97D of the pair of front mounting plates 93A and 93B are joined by spot welding to and mounted on the outer surfaces of the recessed portions 21G and the bottom surface portions 21C of the corresponding half bodies 92A and 92B of the pair. Consequently, the pair of front mounting plates 93A and 93B is mounted in such a manner as to cover the front end portions of the pair of half bodies 92A and 92B. In Fig. 24, black dots indicate joint locations by spot welding. Note that joining may be performed by not limited to spot welding but also welding such as laser welding.

The nuts 101 into each of which the unillustrated bolt inserted through the through-hole 100 is screwed are mounted by joining such as arc welding, spot welding, or laser welding on the rear end portions of the through-holes 100 formed at the positions outward in the vehicle width direction with respect to the centers in the vehicle width direction of the pair of front mounting plates 93A and 93B. Therefore, the crash box 121 is integrally assembled to the bumper reinforcement 2 by bolting with the nuts 101 welded at the positions outward in the vehicle width direction with respect to the centers of the pair of front mounting plates 93A and 93B in the vehicle width direction and at the rear end portions of the through-holes 100 of the edge portions on the inner side in the vehicle width direction of the pair of front mounting plates 93A and 93B.

### [Assembly of Crash Box]

Next, an assembly procedure of the crash box 121 is described with reference to Fig. 25. As illustrated in Fig. 25, firstly, the front mounting plate 93A to be placed on the upper side is brought into contact with the front end portion of the half body 92A that is placed in such a manner that the opening side faces downward. Then, the bent piece 97A of the front mounting plate 93A is brought into contact with the inner surface of the vertical wall portion 21B on the outer side in the vehicle width direction, and the welding-purpose mounting piece 97B is brought into contact with the outer surface of the front end portion of the recessed portion 21G of the half body 92A.

Moreover, the pair of riveting-purpose mounting pieces 97C and 97D of the front mounting plate 93A is placed and positioned in contact with the outer surfaces of the front end portions of the bottom surface portions 21C of the half body 92A. The mounting rib portion 107 of the rear mounting plate 95A to be placed on the upper side is subsequently brought into contact with the outer surfaces of the bottom surface portions 21C and the recessed portion 21G, and placed and positioned along the rear side edge portion of the half body 92A.

Then, in this state, the welding-purpose mounting piece 97B of the front mounting plate 93A is joined by spot welding to the outer surface of the recessed portion 21G of the half body 92A, and the riveting-purpose mounting pieces 97C and 97D of the front mounting plate 93A are joined by spot welding to the outer surfaces of the bottom surface portions 21C of the half body 92A. Moreover, the mounting rib portion 107 of the rear mounting plate 95A is joined by spot welding to the outer surfaces of the bottom surface portions 21C and the recessed portion 21G of the half body 92A. Consequently, a semifinished product 113 (refer to Fig. 23) is assembled in which the front mounting plate 93A is mounted in such a manner as to cover the front end portion of the half body 92A and in which the rear mounting plate 95A is mounted in such a manner as to protrude from the outer surface of the rear side edge portion of the half body 92A in a direction away from each other.

Next, the half body 92B to be placed on the lower side is placed in such a manner that the opening side faces downward. The front mounting plate 93B to be placed on the lower side is then brought into contact with the front end portion of the half body 92B. Then, the bent piece 97A of the front mounting plate 93B is brought into contact with the inner surface of the vertical wall portion 21B on the outer side in the vehicle width direction, and the welding-purpose mounting piece 97B is brought into contact with the outer surface of the front end portion of the recessed portion 21G of the half body 92B.

Moreover, the pair of riveting-purpose mounting pieces 97C and 97D of the front mounting plate 93B is placed and positioned in contact with the outer surfaces of the front end portions of the bottom surface portions 21C of the half body 92B. Subsequently, the mounting rib portion 107 of the rear mounting plate 95B to be placed on the lower side is brought into contact with the outer surfaces of the bottom surface portions 21C and the recessed portion 21G, and placed and positioned along the rear side edge portion of the half body 92B.

Then, in this state, the welding-purpose mounting piece 97B of the front mounting plate 93B is joined by spot welding to the outer surface of the recessed portion 21G of the half body 92B, and the riveting-purpose mounting pieces 97C and 97D of the front mounting plate 93B are joined by spot welding to the outer surfaces of the bottom surface portions 21C of the half body 92B. Moreover, the mounting rib portion 107 of the rear mounting plate 95B is joined by spot welding to the outer surfaces of the bottom surface portions 21C and the recessed portion 21G of the half body 92B. Consequently, a semifinished product 115 (refer to Fig. 23) is assembled in which the front mounting plate 93B is mounted in such a manner as to cover the front end portion of the half body 92B and in which the rear mounting plate 95B is mounted in such a manner as to protrude from the outer surface of the rear side edge portion of the half body 92B in a direction away from each other.

After that, the semifinished product 115 to be placed on the lower side is placed in such a manner that the opening side of the half body 92B faces upward. Ones of the stepped portions 63B of the rivet pins 63 are then inserted respectively through the joining-purpose through-hole 73 formed in the pair of flange portions 21D and 21E of the half body 92B, and the disk portions 63A are brought into contact with the flange portions 21D and 21E. The pair of mounting-purpose through-holes 111A formed in the both end portions in the longitudinal direction of the tension plate 111 is then placed, and inserted through the disk portions 63A of the rivet pins 63 placed on the rear sides of the pair of flange portions 21D and 21E.

The semifinished product 113 to be placed on the upper side is then placed directly above the half body 92B opening upward with the opening side of the half body 92A facing downward. Subsequently, the semifinished product 113 with the opening side of the half body 92A facing downward is lowered downward, and the upper stepped portions 63B of the rivet pins 63 placed in the pair of flange portions 21D and 21E of the half body 92B are inserted respectively through the joining-purpose through-holes 73 formed in the pair of flange portions 21D and 21E of the half body 92A.

The upper end portions of the disk portions 63A of the rivet pins 63 are then brought into contact with the pair of flange portions 21D and 21E of the half body 92A, and each of the pair of flange portions 21D and the pair of flange portions 21E of the half bodies 92A and 92B is superposed on each other. After that, the pair of the stepped portions 63B formed at the both end portions of the each of the rivet pins 63 is riveted in the up-and-down direction by an unillustrated riveting apparatus for the purpose of joining. Consequently, as illustrated in Fig. 24, the crash box 121 is assembled.

The crash box 121 described above can be assembled in such a manner that the mounting direction in which the welding-purpose mounting pieces 97B and the riveting-purpose mounting pieces 97C and 97D of the pair of front mounting plates 93A and 93B and the mounting rib portions 107 of the pair of rear mounting plates 95A and 95B are mounted by spot welding on the pair of half bodies 92A and 92B is the same direction as the mounting direction in which the each of the pair of flange portions 21D and the pair of flange portions 21E of the pair of half bodies 92A and 92B is superposed, mounted on each other and riveted with the plurality of rivet pins 63. As a result, the assembly time of the crash box 121 can be reduced, and the manufacturing cost can be reduced.

Moreover, arc welding is not required for the manufacture of the crash box 121, and it is possible to ensure prevention of burn-through caused by arc welding in a thin portion. As a result, the pair of front mounting plates 93A and 93B, the pair of rear mounting plates 95A and 95B, and the pair of half bodies 92A and 92B, which form the crash box 121, can be thinned (to a plate thickness of, for example, approximately 0.8 mm to 1 mm). Moreover, when the pair of front mounting plates 93A and 93B, the pair of rear mounting plates 95A and 95B, and the pair of half bodies 92A and 92B are formed of hot-dip galvanized steel sheets or alloyed hot-dip galvanized steel sheets, it is possible to prevent zinc fumes from being generated from the surface of the crash box 121, eliminate the need for the zinc fume removal process, and reduce the manufacturing cost.

Moreover, the pair of half bodies 92A and 92B is superposed on each other with the tension plate 111 sandwiched between the pairs of flange portions 21D and 21E, and is connected by riveting the rivet pins 63 inserted respectively through the both end portions of the tension plate 111. Consequently, the tension plate 111 placed in the vehicle width direction can reinforce the mechanical strength in the vehicle width direction at the rear end portion of the crash box 121. As a result, the pair of front mounting plates 93A and 93B, the pair of rear mounting plates 95A and 95B, and the pair of half bodies 92A and 92B, which form the crash box 121, can be thinned, and the manufacturing cost can be reduced.

### [Joining of Flanges with Bolts]

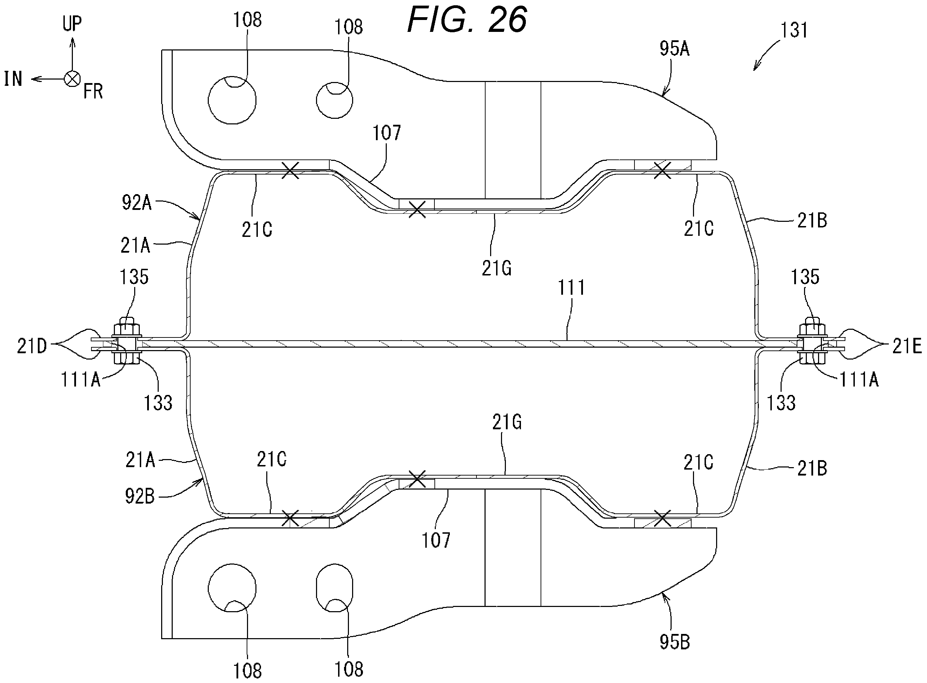

As illustrated in Fig. 26, as another embodiment, it is also possible to join the pairs of flange portions 21D and 21E superposed on each other of the half bodies 92A and 92B by bolting with hexagon socket head cap screws 133 inserted respectively through the joining-purpose through-holes 73 and nuts 135, instead of the rear flange joining-purpose rivet pins 63.

Specifically, the opening side of the half body 92B forming the semifinished product 115 (refer to Fig. 23) is placed in such a manner as to face upward. Ones of the stepped portions 63B of the rivet pins 63 are then inserted respectively through the front j oining-purpose through-holes 73 among the j oining-purpose through-holes 73 (refer to Fig. 25) formed in the pair of flange portions 21D and 21E of the half body 92B. The pair of mounting-purpose through-holes 111 A formed in the both end portions in the longitudinal direction of the tension plate 111 is then placed in such a manner as to be substantially coaxial with the joining-purpose through-holes 73 on the rear sides of the pair of flange portions 21D and 21E.

The semifinished product 113 to be placed on the upper side is then placed directly above the half body 92B opening upward with the opening side of the half body 92A facing downward. Subsequently, the semifinished product 113 with the opening side of the half body 92A facing downward is lowered downward, and the upper stepped portions 63B of the rivet pins 63 placed in the pair of flange portions 21D and 21E of the half body 92B are inserted through the front j oining-purpose through-holes 73 among the joining-purpose through-holes 73 formed in the pair of flange portions 21D and 21E of the half body 92A.

The upper end portions of the disk portions 63A of the rivet pins 63 are then brought into contact with the pair of flange portions 21D and 21 E of the half body 92A. Moreover, at the same time, the both end portions of the tension plate 111 are brought into contact with the pair of flange portions 21D and 21E of the half body 92A, and each of the pair of flange portions 21D and the pair of flange portions 21E of the half bodies 92A and 92B is superposed on each other.

The hexagon socket head cap screws 133 are then inserted from below through the rear joining-purpose through-holes 73 of the pairs of flange portions 21D and 21E superposed on each other of the half bodies 92A and 92B and the mounting-purpose through-holes 111A formed in the both end portions of the tension plate 111, and joined by bolting with the nuts 135. Consequently, a crash box 131 is assembled.

Note that instead of the rivet pins 63 placed on the front sides of the flange portions 21D and 21E of the crash box 131, bolting with a pair of the hexagon socket head cap screws 133 and a pair of the nuts 135 may be used for joining. Moreover, in this case, it is preferable that bolting be performed with washers having substantially the same thickness as the tension plate 111 put in between with the front j oining-purpose through-holes 73 of the flange portions 21D and 21E.

The crash box 131 described above can be assembled in such a manner that the mounting direction in which the welding-purpose mounting pieces 97B and the riveting-purpose mounting pieces 97C and 97D of the pair of front mounting plates 93A and 93B and the mounting rib portions 107 of the pair of rear mounting plates 95A and 95B are mounted by spot welding on the pair of half bodies 92A and 92B is the same direction as the mounting direction in which the each of the pair of flange portions 21D and the pair of flange portions 21E of the pair of half bodies 92A and 92B is superposed and mounted on each other by riveting with a pair of the rivet pins 63 and by bolting with the pair of the hexagon socket head cap screws 133 and the pair of the nuts 135. As a result, the assembly time of the crash box 131 can be reduced, and the manufacturing cost can be reduced.

Moreover, arc welding is not required for the manufacture of the crash box 131, and it is possible to ensure prevention of burn-through caused by arc welding in a thin portion. As a result, the pair of front mounting plates 93A and 93B, the pair of rear mounting plates 95A and 95B, and the pair of half bodies 92A and 92B, which form the crash box 131, can be thinned (to a plate thickness of, for example, approximately 0.8 mm to 1 mm). Moreover, when the pair of front mounting plates 93A and 93B, the pair of rear mounting plates 95A and 95B, and the pair of half bodies 92A and 92B are formed of hot-dip galvanized steel sheets or alloyed hot-dip galvanized steel sheets, it is possible to prevent zinc fumes from being generated from the surface of the crash box 131, eliminate the need for the zinc fume removal process, and reduce the manufacturing cost.

Moreover, the pair of half bodies 92A and 92B is superposed on each other with the tension plate 111 sandwiched between the pairs of flange portions 21D and 21E, and is joined together by bolting with the pair of the hexagon socket head cap screws 133 inserted through the both end portions of the tension plate 111 and the pair of the nuts 135. Consequently, the tension plate 111 placed in the vehicle width direction can reinforce the mechanical strength in the vehicle width direction at the rear end portion of the crash box 131. As a result, the pair of front mounting plates 93A and 93B, the pair of rear mounting plates 95A and 95B, and the pair of half bodies 92A and 92B, which form the crash box 131, can be thinned, and the manufacturing cost can be reduced.

### [Other Embodiments]

As still another embodiment, the crash boxes 1, 51, 61, 81, 91, 121, and 131 may be provided between the bumper reinforcement 2 and the side member 3L extending in the vehicle front-and-rear direction in an orientation rotated (for example, 90 degrees or 180 degrees) around the axes of the main body portions 11 and 92.

As yet another embodiment, in the crash box 121 of Figs. 24 to 25, the joining-purpose through-holes 73 may not be formed in the pairs of flange portions 21D and 21E of the pair of half bodies 92A and 92B. Moreover, the tension plate 111 may not be formed with the mounting-purpose through-holes 111A, at the both end portions in the longitudinal direction. Moreover, spacers that have, for example, a circular or rectangular shape and are formed of flat sheets made of metal such as iron having substantially the same thickness as the tension plate 111 may be sandwiched at positions corresponding to the front joining-purpose through-holes 73 of the flange portions 21D and 21E.

Each of the pair of flange portions 21D and the pair of flange portions 21E of the half bodies 92A and 92B may be then superposed on each other, and joined by spot welding at the positions where the rivet pins 63 were supposed to be placed, with the tension plate 111 and the spacers sandwiched therebetween. Consequently, the superposed flange portions 21D and 21E on both sides in the vehicle width direction of the crash box 121 can be joined by spot welding with the tension plate 111 sandwiched therebetween, and assembled together.

Therefore, the assembly can be performed in such a manner that the mounting direction in which the welding-purpose mounting pieces 97B and the riveting-purpose mounting pieces 97C and 97D of the pair of front mounting plates 93A and 93B and the mounting rib portions 107 of the pair of rear mounting plates 95A and 95B are mounted by spot welding on the pair of half bodies 92A and 92B is the same direction as the mounting direction in which the each of the pair of flange portions 21D and the pair of flange portions 21E of the pair of half bodies 92A and 92B is superposed on each other and mounted by spot welding. As a result, the assembly time of the crash box 121 can be reduced, and the manufacturing cost can be reduced.

Moreover, arc welding is not required for the manufacture of the crash box 121, and it is possible to ensure prevention of burn-through caused by arc welding in a thin portion. As a result, the pair of front mounting plates 93A and 93B, the pair of rear mounting plates 95A and 95B, and the pair of half bodies 92A and 92B, which form the crash box 131, can be thinned (to a plate thickness of, for example, approximately 0.8 mm to 1 mm). Moreover, when the pair of front mounting plates 93A and 93B, the pair of rear mounting plates 95A and 95B, and the pair of half bodies 92A and 92B are formed of hot-dip galvanized steel sheets or alloyed hot-dip galvanized steel sheets, it is possible to prevent zinc fumes from being generated from the surface of the crash box 121, eliminate the need for the zinc fume removal process, and reduce the manufacturing cost.

Moreover, each of the pair of flange portions 21D and the pair of flange portions 21E of the pair of half bodies 92A and 92B is superposed on each other with the tension plate 111 and the spacers sandwiched therebetween, and joined together by spot welding. Consequently, the tension plate 111 placed in the vehicle width direction can reinforce the mechanical strength in the vehicle width direction at the rear end portion of the crash box 121. As a result, the pair of front mounting plates 93A and 93B, the pair of rear mounting plates 95A and 95B, and the pair of half bodies 92A and 92B, which form the crash box 121, can be thinned, and the manufacturing cost can be reduced.

### [Advantages of Embodiments]

The embodiments described above have at least the following effects: For example, the pair of front mounting plates and the pair of rear mounting plates are mounted by spot welding or riveting on the front and rear end portions in the vehicle front-and-rear direction of the pair of half bodies. Moreover, each of the pairs of flange portions is superposed on each other in such a manner as to form a tubular body to mount the pair of half bodies on each other by spot welding, riveting, or bolting. The assembly is then performed in such a manner that the mounting direction in which the pair of front mounting plates and the pair of rear mounting plates are mounted on the pair of half bodies is the same direction as the mounting direction in which the each of the pairs of flange portions of the pair of half bodies is superposed and mounted on each other.

Consequently, arc welding is not required for the manufacture of the crash box, and it is possible to ensure prevention of burn-through caused by arc welding in a thin portion. As a result, the pair of front mounting plates, the pair of rear mounting plates, and the pair of half bodies, which form the crash box, can be thinned. Moreover, when the pair of front mounting plates, the pair of rear mounting plates, and the pair of half bodies are formed of hot-dip galvanized steel sheets or alloyed hot-dip galvanized steel sheets, it is possible to prevent zinc fumes from being generated from the surface of the crash box, eliminate the need for the zinc fume removal process, and reduce the manufacturing cost. Moreover, the pair of front mounting plates, the pair of rear mounting plates, and the pair of half bodies can be assembled in the same direction by spot welding, riveting, or bolting, and integrated into a single unit; therefore, the crash box assembly process can be made more efficient.

In some embodiments, the pair of front mounting plates and the pair of rear mounting plates are joined by spot welding the pluralities of bent pieces to the outer surfaces of the bottom surface portions of the half bodies. Moreover, the pair of half bodies is joined together by spot welding with each of the pairs of flange portions of the pair of half bodies superposed on each other. Consequently, the assembly can be performed in such a manner that the mounting direction in which the pair of front mounting plates and the pair of rear mounting plates are mounted by spot welding on the pair of half bodies is the same direction as the mounting direction in which each of the pairs of flange portions of the pair of half bodies is superposed on each other and mounted by spot welding. As a result, the assembly time of the crash box can be reduced, and the manufacturing cost can be reduced.

In some embodiments, the pair of front mounting plates and the pair of rear mounting plates are joined by spot welding the pluralities of bent pieces to the outer surfaces of the bottom surface portions of the corresponding half bodies. Moreover, the pair of half bodies is joined together by riveting or bolting of the flange joining-purpose rivet pins or bolts inserted through the plurality of j oining-purpose through-holes with each of the pairs of flange portions of the pair of half bodies superposed on each other.

Consequently, the assembly can be performed in such a manner that the mounting direction in which the pair of front mounting plates and the pair of rear mounting plates are mounted by spot welding on the pair of half bodies is the same direction as the mounting direction in which the each of the pairs of flange portions of the pair of half bodies is superposed and mounted on each other. As a result, the assembly time of the crash box can be reduced, and the manufacturing cost can be reduced.

In some embodiments, the pair of half bodies, the pair of front mounting plates, and the pair of rear mounting plates are integrally joined by riveting the plurality of bottom surface coupling-purpose rivet pins and the plurality of flange joining-purpose rivet pins. Consequently, the assembly can be performed in such a manner that the mounting direction in which the pair of front mounting plates and the pair of rear mounting plates are mounted on the pair of half bodies is the same direction as the mounting direction in which each of the pairs of flange portions of the pair of half bodies is superposed and mounted on each other. As a result, the assembly time of the crash box can be reduced, and the manufacturing cost can be reduced.

In some embodiments, the pluralities of spot welding-purpose mounting pieces of the pair of front mounting plates are joined by spot welding to the outer surfaces of the bottom surface portions of the corresponding half bodies. The mounting rib portions, which are bent forward along the entire width, of the pair of rear mounting plates are joined by spot welding to the outer surfaces of the bottom surface portions of the corresponding half bodies. Moreover, the pair of half bodies is joined together by riveting or bolting of the flange joining-purpose rivet pins or bolts inserted through the plurality of joining-purpose through-holes with each of the pairs of flange portions of the pair of half bodies superposed on each other.

Consequently, the assembly can be performed in such a manner that the mounting direction in which the pair of front mounting plates and the pair of rear mounting plates are mounted by spot welding on the pair of half bodies is the same direction as the mounting direction in which the each of the pairs of flange portions of the pair of half bodies is superposed and mounted on each other. As a result, the assembly time of the crash box can be reduced, and the manufacturing cost can be reduced.

In some embodiments, the spot welding-purpose mounting pieces of the pair of front mounting plates are joined by spot welding to the outer surfaces of the bottom surface portions of the corresponding half bodies. The mounting rib portions, which are bent forward along the entire width, of the pair of rear mounting plates are joined by spot welding to the outer surfaces of the bottom surface portions of the corresponding half bodies. Moreover, the pair of half bodies is integrally connected by riveting the plurality of bottom surface portion coupling-purpose rivet pins and the plurality of flange joining-purpose rivet pins.

Consequently, the assembly can be performed in such a manner that the mounting direction in which the pair of front mounting plates and the pair of rear mounting plates are mounted on the pair of half bodies is the same direction as the mounting direction in which each of the pairs of flange portions of the pair of half bodies is mounted on each other. As a result, the assembly time of the crash box can be reduced, and the manufacturing cost can be reduced.

In some embodiments, the mechanical strength at the front end portion of the crash box can be reinforced by the lashing nut mounting plate that is placed at the front end portion of the hollow tubular body formed with the pair of half bodies and supported by the plurality of bottom surface portion coupling-purpose rivet pins. As a result, the pair of front mounting plates, the pair of rear mounting plates, and the pair of half bodies, which form the crash box, can be thinned, and the manufacturing cost can be reduced.

In some embodiments, the pair of half bodies is superposed on each other with the tension plate sandwiched between the pairs of flange portions, and is joined together by riveting the flange joining-purpose rivet pins inserted respectively through the both end portions of the tension plate. Consequently, the tension plate placed in the vehicle width direction can reinforce the mechanical strength in the vehicle width direction at the rear end portion of the crash box. As a result, the pair of front mounting plates, the pair of rear mounting plates, and the pair of half bodies, which form the crash box, can be thinned, and the manufacturing cost can be reduced.

In some embodiments, the pair of front mounting plates, the pair of rear mounting plates, and the pair of half bodies are formed of alloyed hot-dip galvanized steel sheets. Consequently, it is possible to prevent zinc fumes from being generated from the surface of the crash box, eliminate the need for the zinc fume removal process, and reduce the manufacturing cost, and also it is possible to improve press formability, paintability, and rust-prevention performance.

Up to this point various embodiments have been described above. However, the present invention is not limited to these embodiments. Naturally, various improvements, modifications, additions, and deletions can be made within the scope that does not depart from the purport of the present invention.

## Claims

1. A crash box provided between a bumper reinforcement extending in a vehicle width direction and a side member extending in a vehicle front-and-rear direction to absorb impact energy at the time of a collision, the crash box comprising:
a hollow tubular body placed along the vehicle front-and-rear direction, the tubular body including a pair of half bodies of approximately hat shape in cross section, the pair of half bodies each having a bottom surface portion, vertical wall portions extending from the bottom surface portion, and flange portions extending from the vertical wall portions;
a pair of front mounting plates placed respectively at front end portions of the pair of half bodies and mounted on one of the bumper reinforcement and the side member; and
a pair of rear mounting plates placed respectively at rear end portions of the pair of half bodies and mounted on the other of the bumper reinforcement and the side member, wherein
the pair of front mounting plates and the pair of rear mounting plates are mounted on the pair of half bodies in a first direction by spot welding or riveting,
the flange portions are superposed on each other and mounted in a second direction by spot welding or riveting, or bolting, and
the first direction and the second direction are the same direction.

2. The crash box according to claim 1, wherein
each of the front mounting plates of the pair and the rear mounting plates of the pair includes a plurality of bent pieces formed by bending parts thereof inward,
the pair of front mounting plates and the pair of rear mounting plates are joined by spot welding the pluralities of bent pieces to outer surfaces of the bottom surface portions of the corresponding half bodies, and are mounted in such a manner as to cover the front and rear end portions of the pair of half bodies, and
the pair of half bodies is joined together by spot welding with pairs of the flange portions superposed on each other.

3. The crash box according to claim 1, wherein
each of the front mounting plates of the pair and the rear mounting plates of the pair includes a plurality of bent pieces formed by bending parts thereof inward,
each of the pair of half bodies includes a plurality of joining-purpose through-holes through each of which a flange joining-purpose rivet pin or a bolt is inserted, in a pair of the flange portions,
the pair of front mounting plates and the pair of rear mounting plates are joined by spot welding the pluralities of bent pieces to outer surfaces of the bottom surface portions of the corresponding half bodies, and are mounted in such a manner as to cover the front and rear end portions of the pair of half bodies, and
the pair of half bodies is joined together by riveting or bolting of the flange joining-purpose rivet pins or the bolts inserted through the plurality of j oining-purpose through-holes, with the pairs of the flange portions superposed on each other.

4. The crash box according to claim 1, further comprising:
a plurality of bottom surface portion coupling-purpose rivet pins each having stepped portions with a reduced outer diameter at both ends thereof, the plurality of bottom surface portion coupling-purpose rivet pins being configured to couple front and rear side edge portions of the bottom surface portions of the pair of half bodies; and
a plurality of flange joining-purpose rivet pins configured to join pairs of the flange portions of the pair of half bodies, wherein
each of the pair of half bodies includes:
a plurality of first riveting-purpose through-holes that are formed in the front and rear side edge portions of the bottom surface portions and through which end portions of the bottom surface portion coupling-purpose rivet pins are inserted; and
a plurality of joining-purpose through-holes that are formed in the pair of the flange portions and through which the flange joining-purpose rivet pins are inserted,
each of the front mounting plates of the pair and the rear mounting plates of the pair includes:
a plurality of bent pieces each formed with a second riveting-purpose through-hole through which the end portion of the bottom surface portion coupling-purpose rivet pin is inserted, the bent pieces being formed by being bent inward respectively at positions facing the plurality of first riveting-purpose through-holes of the half body to be mounted; and
a support-purpose bent portion formed with a plurality of support-purpose through-holes through each of which the bottom surface portion coupling-purpose rivet pin is inserted, at positions facing the second riveting-purpose through-holes, the support-purpose bent portion being bent inward from a side edge portion on an opening side of the corresponding half body, corresponding to the plurality of bent pieces,
each of the pair of front mounting plates and the pair of rear mounting plates is placed in such a manner that the support-purpose bent portions face each other, and is placed in such a manner that the pluralities of bent pieces are brought into contact with an outer surface of the bottom surface portion of the corresponding half body in such a manner as to cover the front and rear end portions of each of the pair of half bodies,
the plurality of bottom surface portion coupling-purpose rivet pins is inserted respectively through the pluralities of support-purpose through-holes formed in the support-purpose bent portions, and the both end portions inserted through the first riveting-purpose through-holes are inserted through the second riveting-purpose through-holes of the corresponding bent pieces,
the plurality of flange joining-purpose rivet pins is inserted respectively through the pluralities of joining-purpose through-holes formed in the opposing pairs of the flange portions, and
the pair of half bodies, the pair of front mounting plates, and the pair of rear mounting plates are integrally connected by riveting the plurality of bottom surface portion coupling-purpose rivet pins and the plurality of flange j oining-purpose rivet pins.

5. The crash box according to claim 1, comprising a plurality of flange joining-purpose rivet pins, or bolts and nuts, configured to join pairs of the superposed flange portions of the pair of half bodies, wherein
the pair of front mounting plates includes a plurality of spot welding-purpose mounting pieces that are bent rearward from side edge portions on opposite sides of the pair of front mounting plates and are in contact with outer surfaces of the bottom surface portions of the half bodies,
the pair of rear mounting plates includes mounting rib portions that are bent forward from adjacent side edge portions of the pair of rear mounting plates and are in contact with the outer surfaces of the bottom surface portions of the half bodies,
each of the pair of half bodies includes, in the pair of the flange portions, a plurality of joining-purpose through-holes through which the flange joining-purpose rivet pins or the bolts are inserted,
the pair of front mounting plates is joined by spot welding the plurality of spot welding-purpose mounting pieces to the outer surfaces of the bottom surface portions of the corresponding half bodies, and is mounted in such a manner as to cover the front end portions of the pair of half bodies,
the pair of rear mounting plates is joined by spot welding the mounting rib portions to the outer surfaces of rear side edge portions of the bottom surface portions of the corresponding half bodies, and is mounted in such a manner as to protrude from the bottom surface portions of the pair of half bodies in directions away from each other, and
the pair of half bodies is joined together by riveting or bolting of the flange joining-purpose rivet pins or bolts inserted through the plurality of j oining-purpose through-holes, with the pairs of the flange portions superposed on each other.

6. The crash box according to claim 1, comprising:
a plurality of bottom surface portion coupling-purpose rivet pins each having stepped portions with a reduced outer diameter at both ends thereof, the plurality of bottom surface portion coupling-purpose rivet pins being configured to couple front side edge portions of the bottom surface portions of the pair of half bodies in a state where the front side edge portions face each other; and
a plurality of flange joining-purpose rivet pins configured to join pairs of the flange portions of the pair of half bodies, wherein
each of the pair of half bodies includes:
a plurality of third riveting-purpose through-holes that are formed in the front side edge portion of the bottom surface portion and through which end portions of the bottom surface portion coupling-purpose rivet pins are inserted; and
a plurality of joining-purpose through-holes that are formed in the pair of the flange portions and through which the flange joining-purpose rivet pins are inserted,
the pair of front mounting plates includes:
spot welding-purpose mounting pieces that are bent rearward from side edge portions on opposite sides of the pair of front mounting plates and are in contact with outer surfaces of the bottom surface portions of the corresponding half bodies; and
a plurality of riveting-purpose mounting pieces that are bent rearward from the side edge portions on the opposite sides, corresponding to the plurality of third riveting-purpose through-holes, are in contact with the outer surfaces of the bottom surface portions of the corresponding half bodies, and are formed with fourth riveting-purpose through-holes through which the end portions of the bottom surface portion coupling-purpose rivet pins are inserted,
the pair of rear mounting plates includes mounting rib portions that are bent forward from adjacent side edge portions of the pair of rear mounting plates and are in contact with the outer surfaces of rear side edge portions of the bottom surface portions of the half bodies,
the pair of front mounting plates is joined by spot welding the spot welding-purpose mounting pieces to the outer surfaces of the bottom surface portions of the corresponding half bodies, and is mounted in such a manner as to cover the front end portions of the pair of half bodies,
the pair of rear mounting plates is joined by spot welding the mounting rib portions to the outer surfaces of the rear side edge portions of the bottom surface portions of the corresponding half bodies, and is mounted in such a manner as to protrude from the bottom surface portions of the pair of half bodies in directions away from each other,
both end portions, which have been inserted through the third riveting-purpose through-holes of the pair of half bodies, of each of the plurality of bottom surface portion coupling-purpose rivet pins are inserted through the fourth riveting-purpose through-holes of the corresponding riveting-purpose mounting pieces,
the plurality of flange joining-purpose rivet pins is inserted respectively through the pluralities of joining-purpose through-holes formed in the opposing pairs of the flange portions, and
the pair of half bodies, the pair of front mounting plates, and the pair of rear mounting plates are integrally connected by riveting the plurality of bottom surface portion coupling-purpose rivet pins and the plurality of flange j oining-purpose rivet pins.

7. The crash box according to claim 6, comprising a flat nut mounting plate that is placed at a front or rear end portion of the hollow tubular body formed by the pair of half bodies and on which a nut for towing or lashing a vehicle is mounted in such a manner as to protrude outward of the crash box, wherein
the nut mounting plate includes a plurality of second support-purpose mounting pieces that are bent inward from both side edge portions on opposite sides of the nut mounting plate, corresponding to the third riveting-purpose through-holes, are in contact with inner surfaces of the bottom surface portions of the corresponding half bodies, and are each formed with a second support-purpose through-hole through which a shaft portion of the bottom surface portion coupling-purpose rivet pin is inserted, at positions facing the third riveting-purpose through-holes,
the pair of front mounting plates, or the pair of rear mounting plates, includes a nut insertion-purpose notch portion cut in adjacent side edge portions of the pair of front mounting plates or the pair of rear mounting plates in directions away from each other, through which the nut is inserted,
the plurality of bottom surface portion coupling-purpose rivet pins is inserted respectively through the second support-purpose through-holes formed in a plurality of pairs of the second support-purpose mounting pieces that are formed in the nut mounting plate and face each other in a vehicle up-and-down direction, and the both end portions inserted through the third riveting-purpose through-holes are inserted through the fourth riveting-purpose through-holes in the corresponding riveting-purpose mounting pieces, and
the pair of half bodies, the pair of front mounting plates, and the pair of rear mounting plates are integrally connected by riveting the plurality of bottom surface portion coupling-purpose rivet pins and the plurality of flange j oining-purpose rivet pins, and the nut mounting plate is placed inside front end portions of the pair of half bodies so that the nut protrudes outward of the crash box from the nut insertion-purpose notch portion.

8. The crash box according to any of claims 5 to 7, comprising an elongated tension plate that is placed along the vehicle width direction and is sandwiched between the pairs of the flange portions of the pair of half bodies in such a manner that both end portions of the tension plate face the joining-purpose through-holes provided on rear sides of the pairs of the flange portions, wherein
the flange joining-purpose rivet pins each include:
a disk portion larger than the j oining-purpose through-hole; and
a stepped portion at each of both axial ends of the disk portion to be inserted through the joining-purpose through-hole,
the tension plate includes a pair of mounting-purpose through-holes that are formed in the both end portions and through which the disk portions of the flange joining-purpose rivet pins are inserted,
the tension plate is placed in such a manner that the disk portions of a pair of the flange joining-purpose rivet pins whose stepped portions have been inserted through the joining-purpose through-holes provided on the rear sides of the pair of the flange portions of one of the half bodies are inserted through the pair of mounting-purpose through-holes, and
the pair of half bodies is superposed on each other with the tension plate sandwiched between the pairs of the flange portions, and joined together by riveting the stepped portions inserted through the plurality of joining-purpose through-holes.

9. The crash box according to any of claims 1 to 8, wherein
the pair of front mounting plates, the pair of rear mounting plates, and the pair of half bodies are formed of alloyed hot-dip galvanized steel sheets.

10. A method for manufacturing the crash box according to claim 2, comprising the steps of:
joining the pluralities of bent pieces of one of the front mounting plates and one of the rear mounting plates by spot welding to the outer surface of the bottom surface portion at both side edge portions of the corresponding one of the half bodies;
joining the pluralities of bent pieces of the other front mounting plate and the other rear mounting plate by spot welding to the outer surface of the bottom surface portion at both side edge portions of the corresponding other half body;
superposing the pairs of the flange portions on each other in such a manner that an inner surface of the bottom surface portion of the one of the half bodies faces an inner surface of the bottom surface portion of the other half body; and
joining the pairs of the superposed flange portions by spot welding.

11. A method for manufacturing the crash box according to claim 3, comprising the steps of:
joining the pluralities of bent pieces of one of the front mounting plates and one of the rear mounting plates by spot welding to the outer surface of the bottom surface portion at both side edge portions of the corresponding one of the half bodies;
joining the pluralities of bent pieces of the other front mounting plate and the other rear mounting plate by spot welding to the outer surface of the bottom surface portion at both side edge portions of the corresponding other half body;
superposing the pairs of the flange portions on each other in such a manner that an inner surface of the bottom surface portion of the one of the half bodies faces an inner surface of the bottom surface portion of the other half body, and inserting the flange joining-purpose rivet pins or the bolts through the pluralities of the joining-purpose through-holes of the pairs of the superposed flange portions; and
riveting or tightening the inserted flange j oining-purpose rivet pins or the bolts.

12. A method for manufacturing the crash box according to claim 4, comprising the steps of:
placing the pluralities of bent pieces of one of the front mounting plates and one of the rear mounting plates in such a manner as to be in contact with the outer surface of the bottom surface portion at both side edge portions of the corresponding one of the half bodies, and to cause the plurality of first riveting-purpose through-holes to communicate with pluralities of the second riveting-purpose through-holes;
inserting one end sides of the bottom surface portion coupling-purpose rivet pins respectively through the pluralities of support-purpose through-holes formed in the support-purpose bent portions of the one of the front mounting plates and the one of the rear mounting plates, which have been placed, and inserting the one end portions of the bottom surface portion coupling-purpose rivet pins through the first riveting-purpose through-holes and the second riveting-purpose through-holes;
inserting one end portions of the flange j oining-purpose rivet pins through the plurality of joining-purpose through-holes formed in the pair of the flange portions of one of the half bodies;
placing the pluralities of bent pieces of the other front mounting plate and the other rear mounting plate in such a manner as to be in contact with the outer surface of the bottom surface portion at both side edge portions of the corresponding other half body, and to cause the plurality of first riveting-purpose through-holes to communicate with pluralities of the second riveting-purpose through-holes;
inserting the other end sides of the bottom surface portion coupling-purpose rivet pins respectively through the pluralities of support-purpose through-holes formed in the support-purpose bent portions of the other front mounting plate and the other rear mounting plate, which have been placed, and inserting the other end portions of the bottom surface portion coupling-purpose rivet pins through the first riveting-purpose through-holes and the second riveting-purpose through-holes of the other half body;
inserting the other end portions of the inserted flange joining-purpose rivet pins through the plurality of joining-purpose through-holes formed in the pair of the flange portions of the other half body; and
riveting the both end portions of the plurality of bottom surface portion coupling-purpose rivet pins inserted through the pluralities of the second riveting-purpose through-holes of the pair of front mounting plates and the pair of rear mounting plates, and the both end portions of the plurality of flange j oining-purpose rivet pins inserted through the pluralities of joining-purpose through-holes of the pair of half bodies.

13. A method for manufacturing the crash box according to claim 5, comprising the steps of:
joining a plurality of the spot welding-purpose mounting pieces of one of the front mounting plates by spot welding to the outer surface of the bottom surface portion at a front side edge portion of corresponding one of the half bodies, and joining the mounting rib portion of one of the rear mounting plates by spot welding to the outer surface of the bottom surface portion at a rear side edge portion of the one of the half bodies;
joining a plurality of the spot welding-purpose mounting pieces of the other front mounting plate by spot welding to the outer surface of the bottom surface portion at a front side edge portion of the corresponding other half body, and joining the mounting rib portion of the other rear mounting plate by spot welding to the outer surface of the bottom surface portion at a rear side edge portion of the other half body;
superposing the pairs of the flange portions on each other in such a manner that an inner surface of the bottom surface portion of the one of the half bodies faces an inner surface of the bottom surface portion of the other half body, and inserting the flange joining-purpose rivet pins or the bolts through the pluralities of joining-purpose through-holes of the pairs of the superposed flange portions; and
riveting or tightening the inserted flange joining-purpose rivet pins or the bolts.

14. A method for manufacturing the crash box according to claim 6, comprising the steps of:
placing the spot welding-purpose mounting piece and a plurality of the riveting-purpose mounting pieces of one of the front mounting plates in such a manner as to be in contact with the outer surface of the bottom surface portion at the front side edge portion of corresponding one of the half bodies, and to cause the plurality of third riveting-purpose through-holes to communicate with a plurality of the fourth riveting-purpose through-holes;
joining the spot welding-purpose mounting piece of the placed one of the front mounting plates by spot welding to the outer surface of the bottom surface portion of the corresponding one of the half bodies, and joining the mounting rib portion of one of the rear mounting plates by spot welding to the outer surface of the bottom surface portion at the rear side edge portion of the one of the half bodies;
placing the spot welding-purpose mounting piece and a plurality of the riveting-purpose mounting pieces of the other front mounting plate in such a manner as to be in contact with the outer surface of the bottom surface portion at the front side edge portion of the corresponding other half body and to cause the plurality of third riveting-purpose through-holes to communicate with a plurality of the fourth riveting-purpose through-holes;
joining the spot welding-purpose mounting piece of the placed other front mounting plate by spot welding to the outer surface of the bottom surface portion of the corresponding other half body, and joining the mounting rib portion of the other rear mounting plate by spot welding to the outer surface of the bottom surface portion at the rear side edge portion of the other half body;
inserting one end portions of the plurality of bottom surface portion coupling-purpose rivet pins, from an inner surface of the bottom surface portion, through the plurality of third riveting-purpose through-holes of the one of the half bodies and the plurality of the fourth riveting-purpose through-holes of the one of the front mounting plates, and inserting one end portions of the flange j oining-purpose rivet pins through the plurality of joining-purpose through-holes formed in the pair of the flange portions of the one of the half bodies;
inserting the other end portions of the plurality of placed bottom surface portion coupling-purpose rivet pins, from an inner surface of the bottom surface portion of the other half body, through the plurality of third riveting-purpose through-holes of the other half body and the plurality of the fourth riveting-purpose through-holes of the other front mounting plate, and inserting the other end portions of the plurality of placed flange joining-purpose rivet pins through the plurality of joining-purpose through-holes formed in the pair of the flange portions of the other half body; and
riveting the both end portions of the bottom surface portion coupling-purpose rivet pins inserted respectively through the pluralities of the fourth riveting-purpose through-holes of the pair of front mounting plates and the both end portions of the plurality of flange joining-purpose rivet pins inserted respectively through the pluralities of joining-purpose through-holes of the pair of half bodies.
